(19) Europäisches Patentamt
European Patent Office
Office européen des brevets

(11) EP 4 286 417 A1

(12) **EUROPEAN PATENT APPLICATION**
published in accordance with Art. 153(4) EPC

(43) Date of publication:
**06.12.2023 Bulletin 2023/49**

(21) Application number: **22745273.7**

(22) Date of filing: **26.01.2022**

(51) International Patent Classification (IPC):
***C08F 2/01*** *(2006.01)* ***C08F 210/16*** *(2006.01)*

(52) Cooperative Patent Classification (CPC):
**C08F 2/01; C08F 2/06; C08F 10/02; C08F 110/02; C08F 210/08; C08F 210/14; C08F 210/16;**
Y02P 20/52

(86) International application number:
**PCT/CN2022/074012**

(87) International publication number:
**WO 2022/161400 (04.08.2022 Gazette 2022/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.02.2021 CN 202110135261**

(71) Applicants:
- **China Petroleum & Chemical Corporation Beijing 100728 (CN)**
- **Sinopec Yangzi Petrochemical Company Ltd. Nanjing, Jiangsu 210048 (CN)**

(72) Inventors:
- **LI, Chuanfeng Nanjing, Jiangsu 210048 (CN)**
- **WANG, Wenrui Nanjing, Jiangsu 210048 (CN)**
- **JING, Kun Nanjing, Jiangsu 210048 (CN)**
- **CHEN, Minghua Nanjing, Jiangsu 210048 (CN)**
- **XING, Yuejun Nanjing, Jiangsu 210048 (CN)**
- **XIA, Huimin Nanjing, Jiangsu 210048 (CN)**
- **GUO, Feng Nanjing, Jiangsu 210048 (CN)**
- **YOU, Zhonglin Nanjing, Jiangsu 210048 (CN)**
- **CHEN, Shaohui Nanjing, Jiangsu 210048 (CN)**
- **ZHAI, Jianhong Nanjing, Jiangsu 210048 (CN)**
- **YANG, Liu Nanjing, Jiangsu 210048 (CN)**
- **TU, Songtao Nanjing, Jiangsu 210048 (CN)**

(74) Representative: **Hoffmann Eitle Patent- und Rechtsanwälte PartmbB Arabellastraße 30 81925 München (DE)**

# (54) METHOD FOR CONTINUOUSLY PRODUCING ULTRA-HIGH MOLECULAR WEIGHT POLYETHYLENE BY USING SLURRY POLYMERIZATION

(57) The present invention relates to a process for continuously producing an ultra-high molecular weight polyethylene by the ethylene slurry polymerization, wherein raw materials containing ethylene and optionally at least one comonomer are subjected to a continuous slurry polymerization in a hydrogen free atmosphere in the ethylene slurry polymerization condition by using 2-6 ethylene slurry polymerization reaction tanks connected in series, and the deviations of the polymerization temperatures, the polymerization pressures, and the gas phase compositions between the tanks each other are controlled to certain ranges. The ultra-high molecular weight polyethylene having the viscosity-average molecular weight of 150-800 $\times 10^4$ g/mol can be continously produced. This process has flexible polymerization manner, large room for adjusting and controlling, and stable polymer performance. Moreover, the obtained ultra-high molecular weight polyethylene has low metal content, low ash content, and excellent mechanical properties.

EP 4 286 417 A1

## Description

### Technical Field

The present invention relates to a process for the continuous production of an ultra-high molecular weight polyethylene by the slurry polymerization, and more specifically, to a process for the continuous production of an ultra-high molecular weight polyethylene in the ethylene slurry polymerization condition by connecting two or more polymerization reaction tanks in series, wherein raw materials containing ethylene and optionally at least one comonomer are subjected to a continuous polymerization by using an alkane or a mixed alkane as the polymerization solvent, in the presence of the polyethylene catalytic system, in 2-6 polymerization reaction tanks connected in series, to produce the ultra-high molecular weight polyethylene.

### Background technology

Ultra-high molecular weight polyethylene (UHMWPE) generally refers to linear structured polyethylene with a relative molecular weight of 150 $\times 10^4$ g/mol or higher. It has the advantages such as excellent wear resistance, extremely high impact strength, excellent self-lubricating performance, excellent chemical and low-temperature resistance, excellent adhesion resistance, hygiene, non-toxic, and pollution-free properties, recyclability and reusability that ordinary polyethylene does not have, and therefore have been widely applied in the field such as textile, papermaking, food, chemical industry, packaging, agriculture, construction, medical treatment, water purification, sports, entertainment, and military.

The production processes of the ultra-high molecular weight polyethylene mainly include the ethylene slurry polymerization and the ethylene gas phase polymerization. Among them, the ethylene slurry polymerization process is one of the main processes for producing polyethylene.

When producing the ultra-high molecular weight polyethylene by the ethylene slurry in-batch process, the catalyst, the cocatalyst, and the polymerization solvent are added to the reaction tank in one shot. Ethylene is continuously added until the polymerization reaction stops. The in-batch process can fully utilize the polymerization activity of the catalyst and can obtain an ultra-high molecular weight polyethylene with a relatively high viscosity-average molecular weight. However, the production process is complicated, and there are differences between different batches of products.

For example, Chinese patent application 201510078777.4 discloses an ultra-high molecular weight polyethylene catalyst and a process for preparing an ultra-high molecular weight polyethylene by the ethylene slurry in-batch process, which involves adding alkyl aluminum as the cocatalyst to a slurry reaction tank in form of single agitation tank; adding the ultra-high molecular weight polyethylene catalyst to the slurry reaction tank in form of single agitation tank; when the temperature of the slurry reaction tank in form of single agitation tank rises up to 50°C, opening the ethylene feed valve and introducing ethylene; the reaction temperature is controlled at 60°C-70°C, and the reaction pressure is controlled at 0.5MPa-0.7MPa; continuously introducing ethylene and polymerizing for 2 hours to perform the in-batch polymerization reaction to produce the ultra-high molecular weight polyethylene.

When producing the ultra-high molecular weight polyethylene by using the ethylene slurry continuous process, the catalyst, the cocatalyst, the polymerization solvent, ethylene and other raw materials and substances are continuously added to the polymerization reaction tank. Except for the special periods such as the start-up and the shutdown of the production plant, during the normal continuous production, both the feed and the slurry discharge are continuous. The continuous process has high production efficiency, simple operation in the production process, and relatively uniform polymer quality and performance. However, due to the limitations of the fully mixed flow charging and discharging manner, the slurry in the discharge reflects the slurry composition of the catalyst and the polymer obtained thereby from polymerization at different residence time distributions in the polymerization reaction tank. This distribution is closely related to the reaction tank configuration, the stirring and mixing manner, the charging positions, the discharging positions and the discharging manner. A small amount of the main catalyst in the feed will short-circuit and leave the reaction tank or alternatively stays in the reaction tank for a long time. Therefore, it is difficult to obtain the ultra-high molecular weight polyethylene having a relatively high viscosity-average molecular weight, and the molecular weight distribution obtained from the continous process is wider than that of the in-batch process.

For example, Chinese patent applications 201610892424.2, 201610892732.5, 201610892836.6, 201610892837.0 and the like disclose preparation processes for the copolymerized ultra-high molecular weight polyethylene. The molecular chain of said ultra-high molecular weight polyethylene has at least two segments, and either the copolymerization is followed by the homopolymerization or the homopolymerization is followed by the copolymerization.

Chinese patent CN1781956A discloses a process for the continuous production of polyethylene, in which monomer raw material(s) are polymerized in three reaction tanks connected in series to produce a polyethylene resin, which is characterized in that a multi-stage continous polymerization together with mixing is performed in at least one

reactor, besides necessary monomer raw material(s), further using a combination at least containing (A) one of a solid catalyst containing components of titanium, magnesium and halide and a solid catalyst containing a metallocene compound and an aluminoxane, and (B) organo-aluminium compound, combined with other reaction tank(s) to which monomer raw material(s) are supplied, to finally produce a polyethylene resin composition having an intrinsic viscosity in the range of 1.1 to 6.0 and a density in the range of 0.935 g/cm$^3$ to 0.965 g/cm$^3$. The resin composition has a wide bimodal molecular weight distribution, which is particularly suitable for producing high molecular weight polyethylene films or hollow molding materials with excellent environmental stress crack resistance, impact strength resistance, and excellent rigidity. It can be seen from its disclosure that the polyethylene resin involved is not an ultra-high molecular weight polyethylene.

Similarly, Chinese patent CN1781953A discloses a process for the continuous production of polyethylene, in which monomer raw material(s) are polymerized and mixed in four reactors connected in series to produce a polyethylene resin.

Chinese patent CN1405224A discloses a process for producing a three-stage polymerized polyethylene resin composition, by a method of producing three polymers having non-ultra-high molecular weight components, and further by limiting the intrinsic viscosity of each component in the polymers.

CN103342842A discloses a high-density polyethylene resin composition for microporous membranes and a preparation process thereof. The continous in-series polymerization is performed in two polymerization tanks, wherein the hydrogenation copolymerization is performed in the first polymerization tank, and only the copolymerization is performed in the second polymerization tank, which further directly causes the uniform mixing of an ultra-high molecular weight polyethylene component and a medium and low molecular weight polyethylene component.

Currently, the ultra-high molecular weight polyethylene is mainly produced with the ethylene slurry in-batch polymerization method. This method has low production efficiency, and it is difficult to control the consistent quality among different batches. However, the ethylene slurry single-tank continuous polymerization method may also cause the problems such as the slurry back-mixing, which limits the growth of the molecular weight and makes it difficult to produce an ultra-high molecular weight polyethylene with a high viscosity-average molecular weight.

**Summary of the Invention**

On the basis of the existing technology, the present inventors conducted in-depth research and found that when raw materials containing ethylene and optionally at least one comonomer are subjected to a continuous slurry polymerization in a hydrogen free atmosphere in the ethylene slurry polymerization condition by using 2-6 ethylene slurry polymerization reaction tanks connected in series, and the deviations of the polymerization temperatures, the polymerization pressures, and the gas phase compositions between the tanks each other are controlled to certain ranges, the ultra-high molecular weight polyethylene having the viscosity-average molecular weight of 150-800 $\times 10^4$ g/mol can be continously produced.

Moreover, under the in series ethylene slurry continuous polymerization manner of the present invention, the polymerization activity of the main catalyst can be fully utilized, resulting in an ultra-high viscosity-average molecular weight polyethylene with a low metal element content and a low ash content, which can be suitable for the fields with high impurity requirements such as aerospace and medical materials.

That is, the process for continuously producing the ultra-high viscosity-average molecular weight polyethylene by the slurry polymerization of the present invention can achieve the continuous production of the ultra-high viscosity-average molecular weight polyethylene with a high viscosity-average molecular weight, a low metal element content, a low ash content and a high tensile strength without the need for harsh ethylene slurry polymerization reaction tank configuration and polymerization reaction conditions, which is very suitable for industrial-scale production and can be applied to the subsequent preparation of high-end materials such as high-strength ultra-high molecular weight polyethylene fibers and artificial medical joints.

Specifically, the present invention provides a process for continuously producing an ultra-high viscosity-average molecular weight polyethylene (ethylene homopolymer, or copolymer of ethylene and comonomer) by the slurry polymerization, wherein raw materials containing ethylene and optionally at least one comonomer are subjected to a continuous slurry polymerization in a hydrogen free atmosphere, by using 2-6 (preferably 3-4, most preferably 3) ethylene slurry polymerization reaction tanks connected in series as the reactor, and the deviations of the polymerization temperatures, the polymerization pressures, and the gas phase compositions between the tanks each other are controlled to certain ranges. wherein, the main catalyst and the cocatalyst, and the raw materials containing ethylene and optionally at least one comonomer are continuously introduced to the first polymerization reaction tank, and the raw materials containing ethylene and optionally at least one comonomer are supplemented to each of subsequent polymerization reaction tanks, so that the deviation between the gas phase composition in each polymerization reaction tank and that in the first polymerization reaction tank does not exceed $\pm 10\%$, the deviation between the polymerization pressure of each subsequent polymerization reaction tank and the polymerization pressure of the first polymerization reaction tank does not

exceed ±20%, the deviation between the polymerization temperature and the polymerization temperature of the first polymerization reaction tank does not exceed ±8%, the slurry in each polymerization reaction tank leaves the reaction tank by using the manner of overflow or the manner of drawing out for actively controlling the flow rate and goes to the next reaction tank or goes to the aftertreatment system; hence an ultra-high viscosity-average molecular weight polyethylene having a low metal element content, a low ash content and a high mechanical property can be obtained.

The present invention also provides an ultra-high molecular weight polyethylene (an ethylene homopolymer or a copolymer of ethylene and the comonomer), which has a viscosity-average molecular weight of 150-800 $\times 10^4$ g/mol, preferably 300-700 $\times 10^4$ g/mol, a metal element content of 0-40 ppm, preferably 0-30 ppm, a bulk density of 0.30-0.55 g/cm$^3$, preferably 0.33-0.52 g/cm$^3$, a comonomer molar insertion rate of 0-2.0%, preferably 0-1.0%, a tensile yield strength of greater than 21 MPa, preferably greater than 23 MPa, a tensile fracture strength of greater than 33 MPa, preferably greater than 35 MPa, and an ash content of less than 200 ppm, preferably less than 150 ppm.

## Technical effect

In the process for the continuous production of an ultra-high molecular weight polyethylene by the slurry polymerization of the present invention, the amount of the cocatalyst required in the production process is low, the polymerization process is stable, the production process is flexible, and there is a large adjustable space for the product.

Moreover, it solves the back-mixing problem caused by the continuous polymerization in the existing technologies.

In the present invention, an ultra-high molecular weight polyethylene is continuously produced by the slurry polymerization, and therefore the polymerization activity of the main catalyst can be fully exerted and an ultra-high viscosity-average molecular weight polyethylene with a low metal element content and a low ash content can be obtained.

In the process for the continuous production of the ultra-high molecular weight polyethylene by ethylene slurry polymerization of the present invention, the ethylene slurry polymerization activity is high, and the thereby produced ultra-high molecular weight polyethylene (ethylene homopolymer and ethylene copolymer) has a high viscosity-average molecular weight, a low metal element content and a low ash content, and an excellent mechanical property.

The present invention adopts a multi-stage (2-6 reaction tanks) continuous process to produce the ultra-high molecular weight polyethylene, and keeps the deviations between the polymerization temperature, the polymerization pressure, and the polymerization gas phase composition of each reaction tank after the first tank and those of the first tank within certain ranges (preferably substantially identical between the tanks each other). Therefore, the ultra-high molecular weight polyethylene obtained by the process of the present invention has a single narrow peak distribution, and compared with the ultra-high molecular weight polyethylene with a broad peak or multiple peak distribution in the prior art, it has an excellent mechanical property.

## Detailed description

Reference will now be made in detail to the present embodiments of the present invention, but it should be understood that the scope of the invention is not limited by the embodiments, but is defined by the appended claims.

In the context of the present invention, unless otherwise clearly defined or beyond the understanding of those skilled in the art, the hydrocarbons or hydrocarbon-derived groups having three or more carbon atoms (such as propyl, propyloxy, butyl, butane, butene, butenyl, and hexane) that are not prefixed with "n-" have the same meanings as those prefixed with 'n-'. For example, propyl is generally understood as n-propyl, while butyl is generally understood as n-butyl, unless otherwise specified.

In this specification, in order to avoid complicated expressions, it is not clear whether the valence bond status of each substituent or group of the compound is monovalent, divalent, trivalent, or tetravalent, those skilled in the art can make specific judgments based on the positions or substitutions of these substituents or groups (such as groups G, D, B, A, and F recorded or defined in this specification) on the structural formulas of corresponding compounds, and choose the definition that is suitable for the valence bond status at that position or substitution situation from the definitions provided in this specification for these substituents or groups.

All publications, patent applications, patents, and other references mentioned in this specification are all incorporated herein by reference. Unless defined otherwise, all technical and scientific terms used herein have the same meanings as commonly understood by those skilled in the art to which this invention belongs. In case of conflict, the present specification, including definitions, will control. When the specification derives a material, a substance, a process, a step, a device, an element and the like with the expression such as "known to those skilled in the art", "prior art", or the anologous term, it is intended that the subject matter so derived encompasses those having been conventionally used in the art at the time of filing this application, but also includes those which may not be so commonly used at the present time, but will become known in the art as being suitable for a similar purpose.

In the context of this specification, except for what is explicitly stated, any item or matter not mentioned is

directly applicable to those known in the art without any changes. Moreover, any of the embodiments described herein can be freely combined with one or more other embodiments described herein, and the resulting technical solutions or technical ideas are regarded as part of the original disclosure or the original record of the present invention, and should not be regarded as new content that has not been disclosed or anticipated in this specification, unless those skilled in the art believe that the combination is obviously unreasonable.

In the absence of an explicit indication, all percentages, parts, ratios and the like mentioned in this specification are based on the weight, unless the basis on the weight is not consistent with the conventional knowledge of those skilled in the art.

Reference will now be made in detail to the present embodiments of the present invention, but it should be understood that the scope of the invention is not limited by the embodiments, but is defined by the appended claims.

In the context of the present invention, unless otherwise specified, the physical property values (such as boiling point) of the material are the values measured at normal temperature (25°C) and normal pressure (101325 Pa).

The inventors of the present invention have conducted in-depth research and found that in the polymerization process of the present invention, by using an alkane solvent having a boiling point of 0-90°C or a mixed alkane solvent having a saturated vapor pressure at 20°C of 4-200 KPa as the polymerization solvent (preferably an alkane solvent having a boiling point of 25-82°C or a mixed alkane solvent having a saturated vapor pressure at 20°C of 30-160 KPa), compared with the previous polymerization solvents, the specific polymerization solvent of the present invention and ethylene and optionally at least one olefin for copolymerization as the reactant have significant different boiling points, therefore the post-treatment of the obtained ultra-high molecular weight polyethylene may be conveniently and efficiently performed, and the residual solvent content in the obtained ultra-high molecular weight polyethylene powder is low, which is very conducive to shortening the drying time of the polyethylene powder, saving the cost of the post-treatment of the polyethylene powder.

In addition, in the polymerization process of the present invention, a multi-stage (2-6 reaction tanks) continuous process, in which a deviation of the polymerization pressure and temperature between the tanks each other is within a certain range (preferably substantially identical between the tanks each other), is used to produce the ultra-high molecular weight polyethylene, which can produce an ultra-high molecular weight polyethylene at high polymerization temperature and therefore fully exert the polymerization activity of the main catalyst. Moreover, in the existing technologies, a single-tank (1-stage) polymerization reactor, or a 1-2 stage loop reactor, or a 3 or higher stage loop cascade is used and only suitable for the homopolymerization. In contrast, the polymerization process of the present invention can be suitable for the slurry polymerization based on homopolymerization or copolymerization, and can achieve higher insertion rate of olefin for copolymerization.

Through the polymerization process of the present invention, after preparing the crude product of the ultra-high molecular weight polyethylene powder, there is no need for complex subsequent purification processes (such as high-purity solvent washing, high-purity water washing, high-temperature digestion, and polymer melting and filtering), and nothing remains but to remove the corresponding solvent (through filtering, decanting, flash evaporation, evaporation to dryness, and the like), so that the high-purity ultra-high molecular weight polyethylene with low metal element content, low ash content, and excellent mechanical property can be obtained.

In the present invention, a multi-stage (2-6 reaction tanks) continuous process is used to produce the ultra-high molecular weight polyethylene, wherein the deviation of the polymerization pressure and temperature between the tanks each other is within a certain range (preferably substantially identical between the tanks each other). This can effectively solve the back-mixing problem in the production of polyethylene by the continuous polymerization process in the existing technology and fully release the catalyst activity, further improving the polymerization degree of ethylene or ethylene and the comonomer. In addition, reaction conditions that are substantially identical between the tanks each other further ensure the stable chain extension of polyethylene. The thereby obtained ultra-high molecular weight ethylene homopolymer and ethylene copolymer have high viscosity average molecular weight, and low metal element and low ash content.

The mechanical properties of the ultra-high molecular weight polyethylene produced by the multi-stage (2-6 reaction tanks) continuous process of the present invention are excellent. Without any theoretical limitations, the inventors of the present invention believe that in the polymerization process of the present invention, the main catalyst and the cocatalyst, raw materials containing ethylene and optionally at least one comonomer, are continuously added to the first polymerization reaction tank, and the raw materials of ethylene and optionally the comonomer are further added in subsequent in-series reactor tanks, so that the deviation between the gas phase composition in each subsequent reaction tank and that in the first reaction tank is within a certain range (preferably substantially identical between the tanks each other), so that the polymerization activity of the main catalyst can be fully utilized under the basically same gas phase composition, and it is guaranteed that the deviation between the polymerization temperature and the polymerization pressure of each subsequent reaction tank and that in the first reaction tank is within a certain range (preferably substantially identical between the tanks each other). Therefore, the ultra-high molecular weight polyethylene obtained by the process of the present invention has a single narrow peak distribution, which has excellent mechanical properties

compared to the ultra-high molecular weight polyethylene with a broad peak or multiple peak distribution in the prior art.

The polyethylene of the present invention includes homopolymers obtained by homopolymerization of ethylene, and copolymers obtained by copolymerization of ethylene and the comonomer. Polyethylene is sometimes referred to as ethylene polymer in the present invention.

According to the process for the continuous production of the ultra-high viscosity-average molecular weight polyethylene by the slurry polymerization of the present invention, as the polyethylene main catalyst, there is no special limitation thereon. A catalyst commonly used in the art for catalyzing the ethylene polymerization or a complex, a compound, or a composition with the catalytic activity for the homopolymerization of ethylene monomer or the copolymerization of ethylene with the comonomer can be used. Specifically, it can be one of metallocene catalyst, non-metallocene catalyst, Zeigler-Natta type catalyst, and Ziegler catalyst, or composite catalysts of two or more therof, preferably a supported single-center metal catalyst having the activity for catalyzing the ethylene polymerization, a supported multiple-active center metal catalyst, a Zeigler-Natta type catalyst, a supported Zeigler-Natta and metallocene composite catalyst, a supported bis- or multiple- metallocene catalyst, a supported Zeigler-Natta and non-metallocene composite catalyst, a supported bis- or multiple-non-metallocene catalyst, a supported metallocene and non-metallocene composite catalyst, a supported post-transition metal catalyst, a supported Ziegler-Natta type catalyst and the like.

Specifically, the polyethylene main catalyst can be selected from supported non-metallocene catalysts, for example the supported non-metallocene catalysts involved in the following invention patents: CN200310106156.X, CN200310106157.4, CN200410066068.6, CN200510119401.X, CN200610107651.6, CN200710162677.5, CN 200710162667.1, CN200710162672.2, CN 200710162675.6, CN200710162676.0, CN200710162666.7, CN200910180100.6, CN 200910180607.1, CN200910180601.4, CN200910180606.7, CN200910180602.9, CN200910180605.2, CN200910180603.3, CN200910180604.8, CN200910210988.3, CN200910210984.5, CN200910210989.8, CN200910210986.4, CN200910210985.X, CN200910210990.0, CN200910210987.9, CN200910210991.5, CN201010286008.0, CN201010286012.7, CN201010284870.8, CN201010285982.5, CN201010284856.8, CN201010285970.2, CN201010285956.2, CN201010285969.X, CN201010285958.1, CN201010285967.0, CN201010285994.8, CN201110259336.6, CN201110259219.X, CN201110259330.9, CN201110259327.7, CN201110259367.1, CN201110259289.5, CN201110259359.7, CN201110259282.3, CN201110259318.8, CN201110259258.X, CN201110259300.8, CN201110259254.1, CN001110259299.9, CN201110259245.2, CN201110259296.5, CN201110259338.5, CN201110259370.3, CN201110259339.X, CN201110259293.1, CN201110259356.3, CN201210063756.1, CN201210063777.3, CN201210063788.1, CN201210063818.9, CN201210063824.4, CN201210063843.7, CN201210063854.5, CN201210063876.1, CN201210063878.0, CN201210063891.6, CN201210063894.X, CN201210063907.3, CN201210063909.2, CN201210063935.5, CN201210063941.0, CN201210063945.9, CN201310189677.X, CN201310227368.7, CN201310227370.4, CN201310227830.3, CN201310227393.5, CN201310452714.1, CN201710814678.7, CN201710814595.8, CN201710814594.3, CN201710814593.9, CN201710814592.4, CN201710814591.X, CN201811144599.0, CN201811144768.0, CN201811139936.7, CN201811140811.6, CN201811139946.0, CN201811139741.2, CN201310091208.4.

Specifically, the polyethylene main catalyst can be selected from supported metallocene catalysts, for example the supported metallocene catalysts involved in the following invention patents: CN201110247347.2, CN201110080343.X, CN201010518904.5, CN201010519660.2, CN201210289014.0, CN200910078596.6, CN201310090758.4, CN201310090736.8, 201310521768.9, CN201410589467.4, CN201410590067.5, CN201610835700.1, 201610944191.6, CN201710959423.X, CN201110247349.1, CN201110080294.X, CN201110080395.7, CN201210289017.4, CN201210289031.4, CN201310091192.7, CN201310540973.X, CN201510724626.1, CN200410086283.2, CN200610137777.8, CN201610944182.7, CN201710312720.5, CN201110080422.0, CN201110080422.0, CN201110080394.2, CN201010519406.2, CN201010519715.X, CN201010519174.0, CN201010519429.3, CN201210289004.7, CN201310090847.9, CN201310091209.9, CN201310540975.9, CN201410554709.6, CN201410513506.2, CN00130388.0, CN200710176589.0, CN201610944083.9, CN201110246705.8, CN201110247085.X, CN2011102914899, CN201010521674.8, CN201310090752.7, CN201310090848.3, CN2013100908483, CN201510624502.6, CN201710166709.2, CN20171031225.2, CN201110246710.9, CN201110080374.5, CN201010519797.8, CN201210289012.1, CN201210418645.8, CN201310090998.4, CN201410252254.2, CN201610393399.3, CN201610956141.X, CN201710958837.0.

The polyethylene main catalyst can be selected from supported Zeigler-Natta type catalysts, for example Zeigler-Natta type catalysts involved in invention patents CN201010522112.5, CN201010240355.X, CN201010502803.9, CN201010511310.1, CN200710121105.2, CN201010502778.4, CN201010502717.8, CN201010240379.5, CN201110148492.5, CN201110148493.X, CN201110148527.5, CN201110148545.3, CN201110306102.2, CN201010240378.0, CN200410086382.0, CN98101108.X, CN200410078280.4, CN200910088546.6, for example the available CMU catalyst (also known as CM catalyst) of Beijing Auda Division of Sinopec Catalyst Co., Ltd., and the like.

Among them, supported non-metallocene catalysts, supported metallocene catalysts, and Zeigler-Natta type

catalysts are preferred.

The polyethylene procatalyst is usually coordinated with an active metal, which can be an active metal commonly used in the art, for example can be selected from Group IVB elements such as titanium, zirconium and hafnium; Group VB elements such as vanadium, Group VIII elements such as iron, cobalt, nickel, and palladium, preferably Group IVB metal elements, most preferably titanium metal element. It should be noted that in the present invention, unless otherwise specified, the molar amount of the polyethylene main catalyst is based on the active metal element in the polyethylene main catalyst.

According to the present invention, the polyethylene main catalyst can be a supported catalyst, and the support can be selected from porous silica gel support, layered porous support, organic polymer support, magnesium compound support, oxide support, and mixtures thereof.

The magnesium compound support for example can be selected from magnesium compounds. For example, magnesium halide, alkoxy magnesium halide, alkoxy magnesium, alkyl magnesium, alkyl magnesium halide and alkyl alkoxy magnesium can be enumerated. These magnesium compounds can be used alone or in combination.

As porous supports, for example those organic or inorganic porous solids conventionally used as the support in the preparation of a supported olefin polymerization catalyst in the art can be enumerated.

Specifically, as organic porous solid, for example, olefin homopolymer or copolymer, polyvinyl alcohol or a copolymer thereof, cyclodextrin, (co)polyester, (co)polyamide, vinyl chloride homopolymer or copolymer, acrylate homopolymer or copolymer, methacrylate homopolymer or copolymer, styrene homopolymer or copolymer and the like, and a partially crosslinked form of these homopolymers or copolymers can be enumerated, wherein a partially crosslinked styrene polymer (for example having a crosslinking degree of at least 2% but less than 100%) is preferable.

According to the present invention, when using an organic porous solid as support, the organic porous solid can also be thermally activated before use. The thermal activation treatment can be carried out in the usual way, e.g. heating the organic porous solid under reduced pressure or inert atmosphere. The inert atmosphere herein means that the gas contains only a very small amount of the component that can be reacted with said organic porous solid or is free of the component that can be reacted with said organic porous solid. As said inert atmosphere, for example, nitrogen gas atmosphere or noble gas atmosphere can be enumerated, wherein nitrogen gas atmosphere is preferable. Since the organic porous solid has poor heat resistance, the thermal activation process should be carried out based on a prerequisite that it does not damage the structure and basic composition of the organic porous solid itself. Generally, the thermal activation temperature is 50-400°C, preferably 100-250°C, and the thermal activation time is 1-24 hours, preferably 2-12 hours. After the thermal activation treatment, the organic porous solid needs to be kept under a positive pressure in an inert atmosphere for later use.

As inorganic porous solid, for example, refractory oxides of Group IIA, IIIA, IVA or IVB metal of the periodic table of elements (for example silica (also known as silicon oxide or silica gel), alumina, magnesia, titania, zirconia, thoria or the like), or any refractory composite oxide of these metals (for example silica-alumina, magnesia-alumina, titania-silica, titania-magnesia, titania-alumina and the like), and clay, molecular sieve (for example ZSM-5 and MCM-41), mica, montmorillonite, bentonite, diatomaceous earth and the like can be enumerated.As said inorganic porous solid, an oxide formed by the pyrohydrolysis of a gaseous metal halide or a gaseous silicon compound, for example silica gel obtained by the pyrohydrolysis of silicon tetrachloride, alumina obtained by the pyrohydrolysis of aluminium trichloride, or the like can also be enumerated. Silica, alumina, magnesia, silica-alumina, magnesia-alumina, titania-silica, titania, molecular sieve, montmorillonite and the like are preferable, and silica is particularly preferable.A suitable silica can be produced by a conventional process, or may be any commercially available product, for example, Grace 955, Grace 948, Grace SP9-351, Grace SP9-485, Grace SP9-10046, Grace 2480D, Grace 2212D, Grace 2485, Davsion Syloid 245 and Aerosil812 available from the Grace company; ES70, ES70X, ES70Y, ES70W, ES757, EP10X and EP11 available from the Ineos company; and CS-2133 and MS-3040 available from the PQ company.

According to the present invention, the cocatalyst is one or more of aluminoxane, alkyl aluminum, and haloalkyl aluminum, preferably one or more of alkyl aluminum.

As said aluminoxane, for example, a linear aluminoxane represented by the undermentioned general formula (I-1) and a cyclic aluminoxane represented by the undermentioned general formula (I-2) can be enumerated.

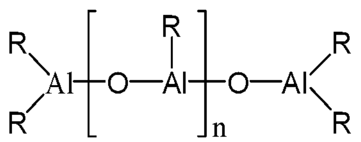 (I-1) 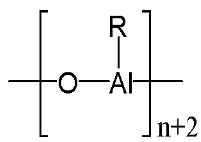 (I-2)

In the aforementioned general formulae, the groups R are identical to or different from (preferably identical to) each other, and each independently selected from $C_1$-$C_8$ alkyl, preferably methyl, ethyl, propyl, butyl, and isobutyl, most preferably methyl; n is any integer in the range of 1-50, preferably any integer in the range of 10-30.

As said aluminoxane, methyl aluminoxane, ethyl aluminoxane, iso-butyl aluminoxane and n-butyl aluminoxane are preferable; methyl aluminoxane and iso-butyl aluminoxane are further preferable, and methyl aluminoxane is most preferable.

These aluminoxanes can be used alone or in combination at any proportion.

As said alkyl aluminum, for example, a compound represented by the following general formula (II) can be enumerated:

$$Al(R)_3 \qquad (II)$$

wherein, groups R are identical to or different from (preferably identical to) each other, and are each independently selected from $C_1$-$C_8$ alkyl, preferably methyl, ethyl, propyl, butyl and iso-butyl, most preferably methyl.

Specifically, as said alkyl aluminum, for example, trimethyl aluminum ($Al(CH_3)_3$), triethyl aluminum ($Al(CH_3CH_2)_3$), tri-n-propyl aluminum ($Al(C_3H_7)_3$), tri-iso-propyl aluminum ($Al(i\text{-}C_3H_7)_3$), tri-iso-butyl aluminum ($Al(i\text{-}C_4H_9)_3$), tri-n-butyl aluminum ($Al(C_4H_9)_3$), tri-iso-pentyl aluminum ($Al\ (i\text{-}C_5H_{11})_3$), tri-n-pentyl aluminum ($Al(C_5H_{11})_3$), tri-n-hexyl aluminum ($Al(C_6H_{13})_3$), tri-iso-hexyl aluminum ($Al(i\text{-}C_6H_{13})_3$), diethyl methyl aluminum ($Al(CH_3)(CH_3CH_2)_2$), dimethyl ethyl aluminum ($Al(CH_3CH_2)(CH_3)_2$) and the like can be enumerated, wherein trimethyl aluminum, triethyl aluminum, tri-propyl aluminum and tri-iso-butyl aluminum are preferable; triethyl aluminum and tri-iso-butyl aluminum are preferable.

These alkyl aluminums can be used alone or in combination at any proportion.

As said haloalkyl aluminum, for example, a compound represented by the following general formula (III) can be enumerated:

$$Al(R)_nX_{3\text{-}n} \qquad (III)$$

wherein, groups R are identical to or different from (preferably identical to) each other, and are each independently selected from $C_1$-$C_8$ alkyl, preferably methyl, ethyl, propyl, butyl and iso-butyl, most preferably methyl; X represents F, Cl, Br, or I; n represents 1 or 2.

Specifically, as the haloalkyl aluminum, for example, the following can be enumerated: monochlorodimethylaluminum ($Al(CH_3)_2Cl$), dichloromethylaluminum ($Al(CH_3)Cl_2)$), monochlorodiethylaluminum ($Al(CH_3CH_2)_2Cl$), dichloroethyl aluminum ($Al(CH_3CH_2)Cl_2$), monochlorodipropylaluminum ($Al(C_3H_7)_2Cl$), dichloropropylaluminum ($Al(C_3H_7)Cl_2)$), monochlorodi-n-butylaluminum ($Al(C_4H_9)_2Cl$), dichloro-n-butylaluminum ($Al(C_4H_9)Cl_2$), monochlorodiisobutylaluminum ($Al(i\text{-}C_4H_9)_2Cl$), dichloro-isobutylaluminum ($Al(i\text{-}C_4H_9)Cl_2$), monochlorodi-n-pentylaluminum ($Al(C_5H_{11})_2Cl$), dichloro-n-pentylaluminum ($Al(C_5H_{11})Cl_2$), monochlorodiisopentylaluminum ($Al(i\text{-}C_5H_{11})_2Cl$), dichloro-isopentyl aluminum ($Al(i\text{-}C_5H_{11})Cl_2$), monochlorodi-n-hexylaluminum ($Al(C_6H_{13})_2Cl$), dichloro-n-hexylaluminum ($Al(C_6H_{13})Cl_2$), monochlorodiisohexylaluminum ($Al(i\text{-}C_6H_{13})_2Cl$), dichloro-isohexylaluminum ($Al(i\text{-}C_6H_{13})Cl_2$), monochloromethylethylaluminum ($Al(CH_3)(CH_3CH_2)Cl$), monochloromethylpropylaluminum ($Al(CH_3)\ (C_3H_7)Cl$), monochloromethyl-n-butylaluminum ($Al(CH_3)(C_4H_9)Cl$), monochloromethyl-isobutylaluminum ($Al(CH_3)(i\text{-}C_4H_9)Cl$), monochloroethylpropylaluminum ($Al(CH_2CH_3)(C_3H_7)Cl$), monochloroethyl-n-butylaluminum ($AlCH_2CH_3)(C_4H_9)Cl$), monochloromethyl-isobutylaluminum ($Al(CH_2CH_3)(i\text{-}C_4H_9)Cl$) and the like, wherein monochlorodiethylaluminum, dichloroethylaluminum, monochlorodi-n-butylaluminum, dichloro-n-butylaluminum, monochlorodiisobutylaluminum, dichloro-isobutylaluminum, monochlorodi-n-hexylaluminum, and dichloro-n-hexylaluminum are preferable; chlorodiethylaluminum, dichloroethylaluminum and monochlorodi-n-hexylaluminum are further preferable, and monochlorodiethylaluminum is most preferable.

These haloalkyl aluminums can be used alone or in combination at any proportion.

In addition, according to the present invention, the cocatalysts can be used alone or in combination at any proportion as required, without any special limitations.

In the present invention, unless otherwise specified, the amount of the cocatalyst is expressed as the content of the aluminum (Al) element.

According to the present invention, the polymerization solvent is an alkane solvent having a boiling point of 0-90°C or a mixed alkane solvent having a saturated vapor pressure at 20°C of 4-200 KPa.

As the alkane solvent having a boiling point of 0-90°C, an alkane solvent having a boiling point of 25-82°C is preferable, for example, 2,2-dimethylpropane (also known as neopentane, having a boiling point of 9.5°C, and a saturated vapor pressure at 20°C of 146.63kpa), 2-methylbutane (also known as isopentane, having a boiling point of 27.83°C, and a saturated vapor pressure at 20°C of 76.7KPa), n-pentane (having a boiling point of 36.1°C, and a saturated vapor pressure at 20°C of 56.5KPa), cyclopentane (having a boiling point of 49.26°C, and a saturated vapor pressure at 20°C of 34.6KPa), n-hexane (having a boiling point of 68.73°C), cyclohexane (having a boiling point of 80.7°C), 2-methylpentane (also known as isohexane, having a boiling point of 60.3°C), 3-methylpentane (having a boiling point of 64.0°C), 2,3-dimethylbutane (having a boiling point of 58.7°C), 2,2-dimethylbutane (having a boiling point of 58.7°C), preferably n-pentane, isopentane, cyclopentane, n-hexane, cyclohexane can be enumerated.

As the mixed alkane solvent having a saturated vapor pressure at 20°C of 4-200 KPa, preferably the mixed alkane solvent having a saturated vapor pressure at 20°C of 30-160 KPa, it can be a mixed solvent formed by mixing different alkane solvents according to a certain ratio, for example, a mixed solvent formed from a solvent selected from hexane and isomers thereof and a solvent selected from pentane and isomers thereof, or an alkane mixture obtained by cutting according to the distillation range from a solvent distillation unit. Specifically, a combination of n-pentane and isopentane, a combination of isopentane and neopentane, a combination of n-pentane and cyclopentane, a combination of n-pentane and neopentane, a combination of isopentane and cyclopentane, a combination of neopentane and cyclopentane, a combination of n-hexane and cyclopentane, a combination of n-hexane and n-pentane, a combination of n-hexane and 3-methylpentane, a combination of n-hexane and 2,2-dimethylbutane, a combination of n-hexane and 2,3-dimethylbutane, a combination of n-hexane and cyclohexane, a combination of n-hexane and isohexane, a combination of isohexane and cyclohexane, a combination of n-pentane, isopentane and cyclopentane, a combination of n-hexane, iso-hexane and cyclohexane and the like can be enumerated, but not limited thereto.In the present invention, when a mixed alkane is used as the reaction solvent, the amount of each alkane solvent can be adjusted arbitrarily, as long as the obtained mixed solvent has a saturated vapor pressure of 4-200KPa (preferably 30-160KPa) at 20°C.

In one embodiment of the present inventionAs the mixed alkane solvent having a saturated vapor pressure at 20°C of 4-200 KPa (preferably 30-160 KPa), it is preferably a mixed alkane solvent having a saturated vapor pressure at 20°C of 4-200 KPa (preferably 30-160 KPa) formed by mixing two or more alkanes selected from n-pentane, isopentane, neopentane and cyclopentane, more preferably a combination of n-pentane and isopentane, a combination of isopentane - neopentane, a combination of n-pentane - cyclopentane, a combination of isopentane - cyclopentane, a combination of neopentane and cyclopentane, a combination of n-pentane-isopentane-cyclopentane, a combination of neopentane-isopentane-n-pentane and the like. For the proportion of each alkane in the mixed alkane, for example, when two alkane solvents are mixed, their molar ratio can be 0.01 - 100:1, preferably 0.1-10:1, and when three alkane solvents are mixed, their molar ratio can be 0.01-100:0.01-100:1, preferably 0.1-10:0.1-10:1, so long as the obtained mixed alkane solvent has a saturated vapor pressure at 20°C of 4-200 KPa (preferably 30-160 KPa). In one embodiment of the present invention, only an alkane solvent having a boiling point of 0-90°C or a mixed alkane solvent having a saturated vapor pressure at 20°C of 4-200 KPa is used as the polymerization solvent.

The use of an alkane solvent having a boiling point of 0-90°C or a mixed alkane solvent having a saturated vapor pressure at 20°C of 4-200 KPa provided by the present invention as the polymerization solvent provides an feasible choice for preparing the ultra-high viscosity-average molecular weight polyethylene with the properties such as the different viscosity-average molecular weight through the ethylene slurry polymerization. For example, the use of an alkane solvent having a lower boiling point (for example n-pentane, isopentane, cyclopentane or the like) or a mixed alkane solvent having a higher saturated vapor pressure at 20°C (for example a combination of n-pentane and neopentane, a combination of isopentane and neopentane and the like) is prone to the heat removal of the ethylene slurry polymerization reaction, and therefore can be carried out at a higher polymerization pressure and a lower polymerization temperature, and it is easy to dry the composition and it is easy to recycle and reuse the solvent; _the use of an alkane solvent having a higher boiling point (for example n-hexane, cyclohexane, 3-methylpentane or the like) or a mixed alkane solvent having a lower saturated vapor pressure at 20°C (for example a combination of n-hexane and cyclohexane, a combination of n-hexane and 3-methylpentane, a combination of cyclohexane and 2-methylpentane and the like) can reduce the solvent recovery loss. In order to effectively remove heat from the polymerization reaction, it can be carried out at a lower polymerization pressure and a higher polymerization temperature.

According to the present invention, when the ultra-high molecular weight polyethylene is continuously produced by the ethylene slurry polymerization, for each of polymerization reaction tanks connected in series, the polymerization temperature of each reaction tank is 40-100°C, preferably 50-90°C. In the present invention, the deviation between the polymerization temperature of each reaction tank after the first reaction tank and the polymerization temperature of the first reaction tank does not exceed_±8%, preferably the polymerization temperature of each reaction tank after the first reaction tank and the polymerization temperature of the first reaction tank are substantially identical. In the present invention, "temperature... substantially identical" means the deviation from the reference value does not exceed_± 5%, preferably does not exceed_±2%. If the ethylene slurry polymerization is carried out at a higher polymerization temperature, a solvent with a higher boiling point can be used. Conversely, if the ethylene slurry polymerization is carried out at a lower polymerization temperature, a solvent with a lower boiling point can be used. It is known that in the ethylene slurry polymerization condition, under similar and comparable conditions such as polymerization pressure, main catalyst, cocatalyst, and solvent, within the polymerization temperature range described in the present invention, as the polymerization temperature increases, the viscosity-average molecular weight of the thereby obtained ultra-high viscosity-average molecular weight polyethylene increases first and then decreases. Therefore, according to the present invention, the viscosity-average molecular weight of the ultra-high viscosity-average molecular weight polyethylene obtained from the ethylene slurry polymerization can be adjusted and controlled through the polymerization temperature.

According to the present invention, when the ultra-high molecular weight polyethylene is continuously produced by the ethylene slurry polymerization, for each of polymerization reaction tanks connected in series, the polymerization

pressure of each reaction tank is 0.2 - 4.0 MPa, preferably 1.0-3.0 MPa, more preferably 2.0 - 3.0 MPa. In the present invention, the deviation between the polymerization pressure of each reaction tank after the first reaction tank and the polymerization pressure of the first reaction tank does not exceed_±20%, preferably does not exceed_±10%, more preferably the polymerization pressure of each reaction tank after the first reaction tank and the polymerization pressure of the first reaction tank are substantially identical. In the present invention, "pressure... substantially identical" means the deviation from the reference value does not exceed_± 5%, preferably does not exceed ±2%. In one embodiment of the present invention, each reaction tank has the same pressure. Among them, if the ethylene slurry polymerization is carried out at a higher polymerization temperature, a lower polymerization pressure can be used. Conversely, if the ethylene slurry polymerization is carried out at a lower polymerization temperature, a higher polymerization pressure can be used. In this field, it is known that when the ethylene polymerization (homopolymerization or copolymerization with other monomers) is performed, the reaction pressure in the reaction tank can be controlled with ethylene and the optional comonomer as the polymerization raw material. In the ethylene slurry polymerization condition, under similar and comparable conditions such as polymerization pressure, main catalyst, cocatalyst, and solvent, within the polymerization pressure range described in the present invention, as the polymerization pressure increases, the viscosity-average molecular weight of the thereby obtained ultra-high viscosity-average molecular weight polyethylene increases first and then decreases. Therefore, according to the present invention, the viscosity-average molecular weight of the ultra-high viscosity-average molecular weight polyethylene obtained from the ethylene slurry polymerization can also be adjusted and controlled through the polymerization pressure.

According to the present invention, in the process of continuously producing the ultra-high molecular weight polyethylene by the ethylene slurry polymerization, hydrogen is not used, that is, the polymerization reaction is carried out in a hydrogen free atmosphere.

According to the present invention, when the ultra-high molecular weight polyethylene is continuously produced by the ethylene slurry polymerization, the comonomer is not requisite, but mainly used for producing the ultra-high molecular weight ethylene copolymer. Therefore, in the slurry polymerization of the present invention, when the comonomer is present in each polymerization reaction tank, the volume concentration of the comonomer can be 0.01-5%, and can also be 0.02-5%, or 0.05-3%.

Generally speaking, under the comparable conditions, the molecular weight of the polymer obtained by copolymerization decreases compared to that by homopolymerization. The ultra-high molecular weight ethylene copolymers produced with different polyethylene main catalysts will have different copolymerization performance. In case that the main catalyst produces good copolymerization performance, a relatively low volume concentration of the comonomer can be used, but it is necessary to comprehensively consider the viscosity-average molecular weight of the final polymer.

According to the present invention, as the comonomer for preparing the ultra-high molecular weight ethylene copolymer by the ethylene slurry polymerization, it can be selected from alpha-olefins, diolefins, cyclic olefins, other olefinic unsaturated compounds, and mixtures thereof. As said alpha-olefin, it can be a C3-C10 alpha-olefin, for example, propylene, 1-butene, 1-pentene, 1-hexene, 1-heptene, 4-methyl-1-pentene, 4-methyl-1-hexene, 1-octene, 1-decene, 1-undecene, 1-dodecene, and styrene can be enumerated. As the cyclic olefin, for example, 1-cyclopentene, ethylidene norbornene, and norbornene can be enumerated. As the diolefin, for example, 1,4-butadiene, 2,5-pentadiene, 1,6-heptadiene, vinylnorbornene, norbornadiene, 1,7-octadiene and the like can be enumerated. As said other olefinic unsaturated compound, for example, vinyl acetate, (meth)acrylate and the like can be enumerated. Among them, the comonomer is preferably C3-C10 alpha-olefin, more preferably selected from 1-butene, 1-hexene, 4-methyl-1-pentene, 1-octene, and mixtures thereof, and further preferably selected from 1-butene, 1-hexene, 1-octene, and mixtures thereof.

The present invention uses 2-6, preferably 3-4, and most preferably 3 ethylene slurry polymerization reaction tanks connected in series. The main catalyst and the cocatalyst are continuously added to the first polymerization reaction tank. The concentration of the main catalyst in the first polymerization reaction tank is 0.001-0.100 mmol/L polymerization solvent, preferably 0.005-0.050 mmol/L polymerization solvent; and the molar ratio of the cocatalyst to the main catalyst is 20-200:1, preferably 30-100:1.

According to the present invention, neither the main catalyst nor the cocatalyst is added to any reaction tank other than the first polymerization reaction tank. In addition, as required, a polymerization solvent can also be introduced into other reaction tanks except for the first polymerization reaction tank to adjust the slurry concentration in each reaction tank. According to the present invention, when the continuous production is carried out in the in-series manner, the slurry inside the tank leaves the reaction tank by using the manner of overflow or the manner of drawing out for actively controlling the flow rate, and goes to the next reaction tank or the post-treatment system, preferably the slurry inside the tank leaves the reaction tank by using the manner of overflow, and goes to the next reaction tank or the post-treatment system.

In the process of the present invention, when the deviation of the polymerization pressure and the polymerization temperature between the tanks each other is in a certain range (preferably the polymerization pressure and the polymerization temperature in each reaction tank are substantially identical to each other), the gas phase composition and content in each reaction tank is kept substantially identical to each other. Regardless of whether the material in the

previous reaction tank is transferred in the manner of overflow or the manner of drawing out for actively controlling the flow rate, the raw materials containing ethylene and the optional comonomer in the previous reaction tank may go to the current reaction tank by being entrained in the slurry. According to the present invention, it is all necessary to independently add (supplement) raw materials containing ethylene and the optional comonomer to each reaction tank to maintain the deviations of the polymerization pressure and the gas phase composition of each reaction tank within a certain range. In one embodiment of the present invention, after the gas phase components in the previous reaction tank are vented, only the slurry is transferred to the next reaction tank in the manner of overflow or the manner of drawing out for actively controlling the flow rate, then gas phase components that have the same composition as the feed to the previous reaction tank are fed to the next reaction tank. In one embodiment of the present invention, when ethylene homopolymerization is carried out, since the gas phase raw material participating in the reaction only comprises ethylene, the transfer of the gas phase component (ethylene) accompanying the transfer of the slurry will not affect the gas phase composition of the next tank.

When the slurry is transferred between two polymerization reaction tanks, it is necessary to consider the time and the manner of the slurry transferring between the two tanks. Due to the presence of polymerization reaction raw materials, the main catalyst, and the cocatalyst in the slurry, the reaction will still continue to occur duing the transfer process. At this time, if there are significant changes in the compositions and the conditions of the gas and liquid phases, the polymerization product obtained from the polymerization reaction during the transfer process will affect the overall performance of the final ultra-high molecular weight polyethylene. According to the present invention, in order to reduce or avoid the impact of the polymer generated during this transfer process on the final product, the slurry transferring between two polymerization reaction tanks should be as fast as possible. The preferred in-series continuous production is as follows: the slurry overflows from the overflow port of the previous polymerization reaction tank and directly goes to the next polymerization reaction tank. Most preferably, in order that the slurry smoothly overflows to the next polymerization reaction tank, the overflow is achieved with the help of gravity by arranging a gas phase pressure balance pipe on two cascaded reaction tanks in series. In a preferred case, before the slurry goes to the post-treatment system from the last polymerization reaction tank, it is buffered in a slurry intermediate tank with the insulation function before going to the post-treatment system. The slurry intermediate tank can be a storage tank, a stirring tank, or a slurry intermediate tank with a relatively small length-to-diameter ratio (e.g. 0.5-5, preferably 1-3), preferably an agitation tank having a jacket-heating, and it is preferable to keep the slurry temperature substantially identical to the previous polymerization reaction tank. The retention time in the intermediate tank is 0.1-4.0 hours, preferably 0.5-2.0 hours. When the last reaction tank is connected to the slurry intermediate tank through a pipeline, it is preferred that the pipeline be a pipeline with insulation function and a relatively larger diameter (for example, when the volume of the last polymerization reaction tank is 1-5 $m^3$, the overflow pipe diameter is 50-400 mm, preferably 100-250 mm, and when the volume of the last polymerization reaction tank is 5-10 $m^3$, the overflow pipe diameter is 100-500 mm, preferably 150-250 mm, and the like). Preferably, the insulation temperature for this pipeline is substantially identical to the temperature of the previous polymerization reaction tank.

According to the present invention, it is preferred that the polymerization pressure and the polymerization temperature of each in-series cascaded polymerization reaction tank are substantially identical to each other. According to the present invention, it is preferred that if the comonomer participates in the reaction, the volume concentration of the comonomer in each in-series cascaded polymerization reaction tank is substantially identical to each other. According to the present invention, the deviation between the composition of the reaction raw materials (polymerization gas phase components) in each in-series cascaded polymerization reaction tank and the gas phase composition of the first tank does not exceed_±10%. It is preferred that the gas phase composition of each reaction tank after the first reaction tank and the gas phase composition of the first reaction tank are substantially identical. In the present invention, "gas phase composition... substantially identical" means the deviation from the reference value does not exceed_± 5%, preferably does not exceed_±2%. In one embodiment of the present invention, the gas phase components of each reaction tank are identical to each other. In the present invention, the deviation of the gas phase composition refers to a deviation of the percentage of each gas phase component relative to all gas phase components. For example, when the volume concentration of the comonomer is 3% (reference value), the range of the deviation not exceeding ± 10% relative to the reference value means that the deviation is within the range of 3%×(1±0.1).

According to the present invention, the residence time of each in series polymerization reaction tank for the continuous production of the ultra-high molecular weight polyethylene is 0.1-6 hours, preferably 0.5-4 hours. The sum of the residence time of each in-series polymerization reaction tank, i.e., the total residence time is not specifically limited, as long as the ultra-high molecular weight polyethylene described in the present invention can be obtained. It is related to the ethylene slurry polymerization reaction conditions. When the concentration of the catalyst in the polymerization reaction tank is high, the polymerization pressure and temperature are high, the total residence time can be correspondingly reduced, usually 1-20 hours, Preferably 2-12 hours, most preferably 4-8 hours. The residence time of each in-series polymerization reaction tank can be identical or different. The volume of each in-series polymerization reaction tank can be identical or different. It is found that, according to the present invention, for the sake of fluency and matching

in the production by the continuous process, fully utilizing the catalyst activity and the production capacity in the effective volume of each in-series polymerization reaction tank, the preferred configuration of the residence time and the polymerization reaction tank volume is to use the same polymerization residence time when the effective volumes of the polymerization reaction tanks are identical. For different polymerization reaction tanks, the polymerization residence time is proportionally configured according to the effective volume, that is, doubling the effective volume of the polymerization reaction tank results in the corresponding doubling of the residence time. Most preferably, each of the in-series cascaded polymerization reaction tanks has the same effective volume and the same polymerization residence time, but not limited thereto. The residence time in each polymerization reaction tank is also related to the residual catalyst activity in each reaction tank. In the present invention, the effective volume of the polymerization reaction tank refers to the actual volume under the overflow conditions, or the volume of the slurry that stably remains in the polymerization reaction tank in the case of actively controlling the slurry to leave the polymerization reaction tank.

Unlike the polymerization residence time in the in-batch ethylene slurry polymerization process, which is the polymerization reaction time, in the present invention, when the ethylene slurry polymerization is continuously performed in series, the polymerization residence time is the average reaction residence time in the continuous process, that is, under the continuous and stable production state, the total volume of the slurry in the polymerization reaction tank divided by the volume of slurry leaving the polymerization reaction tank per unit hour. According to the present invention, increasing or decreasing the continuous amount of the polymerization solvent into the polymerization reaction tanks will directly reduce or increase the polymerization reaction residence time. At the same time, increasing or decreasing the concentration of the main catalyst, i.e., increasing or decreasing the polymerization reaction activity, will also reduce or increase the polymerization reaction residence time.

According to the present invention, in each in-series cascaded ethylene slurry polymerization reaction tank, the slurry concentration is 50-500 g polymer/L polymerization solvent, preferably 100-400 g polymer/L polymerization solvent. The slurry concentration in each in series polymerization reaction tank can be adjusted by adjusting the volume of the polymerization solvent continuously added to each in series polymerization reaction tank, adjusting the slurry concentration in the previous stage polymerization reaction tank, adjusting the polymerization residence time and the like. Due to the diverse polymerization performance of the main catalyst, the activities for catalyzing the homopolymerization of ethylene or the copolymerization of ethylene and the comonomer may vary at different polymerization periods. Therefore, the slurry concentration in the polymerization reaction tanks can be comprehensively adjusted, according to the process provided by the present invention, by adjusting the polymerization residence time and/or supplementing the polymerization solvent in combination of considering the actual consumption rates of raw materials such as ethylene and the comonomer, in the in-series cascaded polymerization reaction tanks.

According to the present invention, under a preferred condition, for example, when selecting three in-series polymerization reaction tanks, the residence time of each polymerization reaction tank is configured as 1:0.2-1:0.1-1, preferably 1:0.4-0.8:0.2-0.6, alternatively for example, when selecting four in-series polymerization reaction tanks, the residence time of each polymerization reaction tank is configured as 1:0.2-1:0.1-1:0.1-1, preferably 1:0.4-0.8:0.2-0.6:0.1-0.4, and the like.

According to the present invention, the main catalyst and the cocatalyst are continuously added to the first polymerization reaction tank. For their addition manner, they can be continuously added to the first polymerization reaction tank together with the polymerization solvent according to their ratio. The main catalyst can be continuously added in the form of solid powder; or the catalyst in the form of solid powder can be added to the same solvent as the polymerization solvent, the catalyst slurry is formed in a catalyst formulation tank and then continuously transported to the first polymerization reaction tank through a pump; or alternatively, a catalyst slurry that is formulated in the catalyst factory can be directly used, and continuously transported to the first polymerization reaction tank through a pump. Preferably, the catalyst in the form of solid powder is added to the same solvent as the polymerization solvent, the catalyst slurry is formed in a catalyst formulation tank and then continuously transported to the first polymerization reaction tank through a pump; or a catalyst slurry that is formulated in the catalyst factory is directly used, and continuously transported to the first polymerization reaction tank through a pump. At this point, the concentration of the formulated main catalyst is not particularly limited. It should only be pointed out that its concentration in the first polymerization reaction tank is within the concentration range of the main catalyst limited by the present invention, i.e., 0.001-0.100 mmol/L polymerization solvent, preferably 0.005-0.050 mmol/L polymerization solvent. In fact, considering the flexibility and easy controlling of the ethylene slurry continuous production process, it is preferable to use a high concentration of the main catalyst slurry and continuously add the polymerization solvent at another inlet of the first polymerization reaction tank, so that the ratio of the main catalyst to the polymerization solvent in the reaction tank meets the limitation of the present invention. The polymerization solvents mentioned here include both a freshly added polymerization solvent and a polymerization solvent recovered from the post-treatment system.

According to the present invention, the cocatalyst can be added to the reaction tank in a liquid form, which can be one or more of aluminoxane, alkyl aluminum, and haloalkyl aluminum that are in the pure form, or a solution formulated with an alkane solvent (e.g. those solvents described for the polymerization solvent), and its concentration is not strictly

limited. Preferably, the used solvent is identical to the polymerization solvent. A stock solution of the cocatalyst is formulated, usually 0.1-10 mol/L, preferably 0.5-2.0 mol/L, and continuously introduced into the first polymerization reaction tank, so that the proportions of the main catalyst and the cocatalyst meet the molar ratio of the cocatalyst to the main catalyst is 20-200:1, preferably 30-100:1. As a solvent for the stock solution of the cocatalyst, the same solvent as the polymerization solvent can be used, or other solvents can also be used. Specifically, the solvent can be selected from C5-C10 alkane solvents, e.g. n-pentane, isopentane, neopentane, cyclopentane, n-hexane, isohexane, cyclohexane, n-heptane, iso-heptane, n-decane or the like; or a mixed alkane solvent formed by mixing C5-C10 alkanes according to different proportions, e.g. a mixture of two or more of pentane, hexane, heptane, n-pentane and n-hexane, and a mixture of cyclopentane and n-hexane; or a mixed alkane solvent obtained by cutting from distillation and rectification; preferably the polymerization solvent described in the present invention; specifically the actually used polymerization solvent.

Based on the present invention, the main catalyst, the cocatalyst, and the polymerization solvent are continuously added to the first polymerization reaction tank, and the limitations on the concentration of the main catalyst and the used amount of the cocatalyst according to the present invention are guaranteed. Then, either ethylene or ethylene and the comonomer is/are introduced, and the slurry polymerization of ethylene (homopolymerization) and the slurry polymerization of ethylene and the comonomer (copolymerization) are performed under the conditions such as the stable polymerization pressure and polymerization temperature, while ensuring that the slurry concentration meets the limitations of the present invention. In addition, it is well-known in the art that in order to adjust and control the polymerization pressure, an inert gas (such as nitrogen) that do not participate in the reaction can also be introduced into the polymerization reaction tank.

Then, after the first polymerization reaction tank, the slurry from the previous reaction tank continuously goes to the subsequent in-series cascaded polymerization reaction tank in the manner of overflow or the manner of drawing out for actively controlling the flow rate, and raw materials containing ethylene and the optional comonomer are fed to the subsequent in-series cascaded polymerization reaction tank, so that the deviation between the gas phase composition of each subsequent reaction tank and the gas phase composition of the first reaction tank does not exceed_±10%, and the deviation between the polymerization pressure of each subsequent reaction tank and the polymerization pressure of the first reaction tank does not exceed_± 20%. In addition, in combination with the polymerization reaction situation, an additional polymerization solvent is introduced to the subsequent reaction tank as required to adjust the slurry concentration in the subsequent polymerization tank and avoid the slurry concentration in each reaction tank exceeding the limitation of the present invention that is caused by the in-series reaction.

Then, the material is discharged from the last stage reaction tank to the post-treatment system. Preferably, the material from the last stage reaction tank is buffered in a slurry intermediate tank with an insulation function before going to the post-treatment system. Finally, the ultra-high molecular weight polyethylene of the present invention is obtained. In the present invention, the so-called "post-treatment system" is a well-known system in the art for recovering polyethylene from the slurry in which the polymerization reaction has been completed, and for example includes a device for removing the polymerization solvent such as filtration, centrifugal separation, flash evaporation and the like, a device for purifying the polyethylene, and the like.

In the process of the continuous production of the ultra-high molecular weight polyethylene by the ethylene slurry polymerization according to present invention, there is no specific limitation to the stirring rate in each polymerization reaction tank, as long as it can ensure the normal dispersion of the slurry in the reaction tank. The stirring rotation speed is related to the volume of the reaction tank. Generally speaking, the smaller the volume of the reaction tank is, the higher the stirring rotation speed is required. The stirring rotation speed is 10-1000 rpm, preferably 20-500 rpm.

The ultra-high molecular weight polyethylene obtained by the process of the present invention has a viscosity-average molecular weight of 150-800 $\times 10^4$ g/mol, preferably 300-700 $\times 10^4$ g/mol. The ultra-high molecular weight polyethylene of the present invention has a bulk density of 0.30-0.55 g/cm$^3$, preferably 0.33-0.52 g/cm$^3$, more preferably 0.39-0.50 g/cm$^3$. The ultra-high molecular weight polyethylene of the present invention has a comonomer molar insertion rate of 0.05-4.0%, preferably 0.10-2.0%.

The ultra-high molecular weight polyethylene obtained by the process of the present invention has a metal element content of 0-40 ppm, preferably 0-30 ppm. The ultra-high molecular weight polyethylene of the present invention has an ash content of less than 200 ppm, preferably less than 150 ppm, more preferably less than 80 ppm. The ultra-high molecular weight polyethylene of the present invention has _a tensile yield strength of greater than 21 MPa, and a tensile fracture strength of greater than 33 MPa; further preferably a tensile yield strength of greater than 23 MPa, and a tensile fracture strength of greater than 35 MPa.

The ultra-high molecular weight polyethylene obtained by the process of the present invention has a titanium content of 0-3 ppm, preferably 0-2 ppm, more preferably 0-1 ppm, a magnesium content of 0-10 ppm, preferably 0-5 ppm, more preferably 0-2 ppm, and an aluminum content of 0-30 ppm, preferably 0-25 ppm, more preferably 0-20 ppm.

In one embodiment of the present invention, a process for the continuous production of the ultra-high molecular weight polyethylene by the ethylene slurry polymerization is provided, which is characterized in that using the polyethylene

catalyst as the main catalyst, using one or more of aluminoxane, alkyl aluminum, and haloalkyl aluminum as the cocatalyst, using an alkane solvent having a boiling point of 0-90°C or a mixed alkane solvent having a saturated vapor pressure at 20°C of 4-200 KPa as the polymerization solvent, under the conditions that the polymerization temperature is 40-100°C, the polymerization pressure is 0.2-4.0 MPa, the hydrogen volume concentration in the polymerization reaction tank is 0-2%, and the comonomer volume concentration is 0-10%, 2-6 in-series cascaded ethylene slurry polymerization reaction tanks are used to perform the continuous production,_the slurry in the tank leaves the reaction tank in the manner of overflow or in the manner of drawing out, and then goes to the next reaction tank or to the post-treatment system, the main catalyst and the cocatalyst are continously added to the first polymerization reaction tank, the main catalyst concentration in the tank is 0.001-0.100 mmol/L, the molar ratio of the cocatalyst to the main catalyst is 20-200:1, the residence time in each polymerization reaction tank is 0.1-6 hours, and the slurry concentration is 50-500 g polymer/L polymerization solvent.

In one embodiment of the present invention, in the process for the continuous production of the ultra-high molecular weight polyethylene by the ethylene slurry polymerization, using an alkane solvent having a boiling point of 25-82°C or a mixed alkane solvent having a saturated vapor pressure at 20°C of 30-160 KPa as the polymerization solvent, under the conditions that the polymerization temperature is 50-85°C, the polymerization pressure is 0.4-3.0 MPa, the hydrogen volume concentration in the polymerization reaction tank is 0-1%, the comonomer volume concentration was 0-5%, 3-4 in-series cascaded ethylene slurry polymerization reaction tanks are used to perform the continuous production, the slurry in the tank leaves the reaction tank in the manner of overflow, and then goes to the next reaction tank or to the post-treatment system, the main catalyst concentration in the tank is 0.005-0.050 mmol/L, the molar ratio of the cocatalyst to the main catalyst is 30-100:1, the residence time in each polymerization reaction tank is 0.5-4.0 hours, and the slurry concentration is 100-400 g polymer/L polymerization solvent.

According to the present invention, an ultra-high molecular weight polyethylene having a low metal element content, a low ash content, and a high mechanical property can be prepared through the ethylene slurry polymerization continuous production. In order to reduce the metal element content in the polymer, it is necessary to fully release and exert the catalytic activity of the catalyst for the ethylene polymerization reaction. By using the process of the continuous production of the ultra-high molecular weight polyethylene by the ethylene slurry polymerization according to the present invention, under the conditions including the polyethylene catalyst of the present invention, the polymerization pressure, the polymerization temperature, and the polymerization solvent, the ultra-high viscosity-average molecular weight polyethylene having a low metal element content, a low ash content and a high mechanical property can be obtained.

In addition, the molecular weight of the ultra-high viscosity-average molecular weight polyethylene of the present invention has neither the bimodal distribution nor the multimodal distribution.

By using the process for preparing the ultra-high viscosity-average molecular weight polyethylene of the present invention, the ethylene homopolymer or the copolymer of ethylene and comonomer (also known as polyethylene or ethylene polymer in the present invention) having an ultra-high viscosity-average molecular weight and having a low metal element content, a low ash content, and a high mechanical property can be obtained. These ethylene homopolymers and copolymers have high mechanical properties such as tensile strength. Therefore, the polyethylene of the present invention can be suitable for preparing high-end materials such as high-strength ultra-high molecular weight polyethylene fibers and artificial medical joints.

## Example

The present invention will be described in further detail with reference to examples, but the present invention is not limited to these examples.

The determination of the bulk density of the ultra-high molecular weight polyethylene is carried out in accordance with the standard GB 1636-79.

The content of the active metal element of the polyethylene catalyst and the contents of the elements in micro amounts such as titanium, magnesium, calcium, aluminum, and chlorine in the ultra-high viscosity-average molecular weight polyethylene are determined by the ICP-AES method.

The ash content in the ultra-high molecular weight polyethylene is determined with the direct calcining method in accordance of the national standard GBT9345.1-2008.The polymer is burned in a muffle furnace and its residue is treated at a high temperature until constant weight, the content is obtained by dividing the mass of the residue by the initial polymer mass.

The polymerization activity is determined by dividing the mass of the dried ultra-high molecular weight polyethylene powder obtained in the unit time by the mass of the main catalyst fed in the unit time and it is in kg PE/gCat, which is the number of kilograms of the ultra-high molecular weight polyethylene obtained per gram of the main catalyst.

The viscosity-average molecular weight of the ultra-high molecular weight polyethylene is calculated according to the following method: in accordance of the standard ASTM D4020-00, the intrinsic viscosity of the polymer is measured using a high-temperature dilution type Ubbelohde viscometer process (with a capillary inner diameter of 0.44mm, a

constant temperature bath medium of 300 # silicone oil, a dilution solvent of decalin, and a measurement temperature of 135°C), and then the viscosity-average molecular weight Mv of the polymer is calculated according to the following equation.

$$Mv=5.37\times10^4\times[\eta]^{1.37}$$

wherein, $\eta$ is the intrinsic viscosity.

The determination of the comonomer insertion rate in the ultra-high molecular weight polyethylene is performed as follows, a copolymer with a known content is calibrated with a nuclear magnetic resonance method and the measurement is performed with a 66/S Fourier transform infrared spectrometer of German Bruck Corporation.

The tensile yield strength and the tensile fracture strength of the ultra-high molecular weight polyethylene are measured in accordance with the national standard GB/T 1040.2-2006.

## Example 1

The used polyethylene main catalyst was a supported non-metallocene catalyst described in Example 2 of Chinese patent application 200710162677.5, having a titanium content of 4.25wt% based on the solid dry powder, and formulated as 100g/L of a solution of the main catalyst in hexane, wherein the non-metallocene complex had a structure of

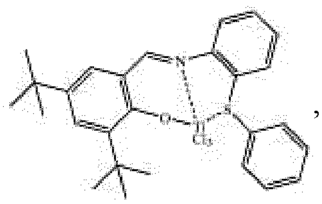,

and the support was a composite support composed of the ES757-type porous silica gel and anhydrous magnesium chloride in the mass ratio of 2:1. The polymerization solvent was n-hexane having a boiling point of 68°C, the cocatalyst was triethyl aluminum and formulated as a solution in hexane (0.88mol/L).

The same three ethylene slurry polymerization reaction tanks connected in series were used, each had a volume of $10.4m^3$ and an effective volume of $7.2m^3$ and a discharging manner of overflow. The polymerization temperature of each polymerization reaction tank was 65°C, and only ethylene was introduced to each reaction tank without comonomers in the tank so that the polymerization pressure of each polymerization reaction tank reached 2.2 MPa.

The main catalyst and the cocatalyst were only added to the first polymerization reaction tank. Based on the solid dry powder, the feed amount of the main catalyst was 50 g/h. The cocatalyst and the main catalyst were continuously fed in the molar ratio of 45:1. The feed amount of the polymerization solvent n-hexane in the first polymerization reaction tank was $3.47m^3/h$, and the slurry concentration was controlled at 288 g polymer/L polymerization solvent. The feed amount of the polymerization solvent n-hexane in the second polymerization reaction tank was $1.74m^3/h$, and the slurry concentration was controlled at 315 g polymer/L polymerization solvent. The feed amount of the polymerization solvent n-hexane in the third polymerization reaction tank was $0.90m^3/h$, and the slurry concentration was controlled at 330 g polymer/L polymerization solvent.

The residence time in each polymerization reaction tank was arranged according to the ratio of 1:0.5:0.25, and the total polymerization residence time was 6 hours.

The slurry was continuously discharged from the third polymerization reaction tank, went into a slurry intermediate tank with a volume of $10.4m^3$ having a heating and stirring mechanism and stayed here for 0.5 hours, and went to a post-treatment system and degassed by flash evaporation, centrifuged with a filter separator and dried to obtain an ultra-high molecular weight polyethylene powder, which had a viscosity-average molecular weight of $460\times10^4$ g/mol, a bulk density of $0.44g/cm^3$, a polymerization activity of 57 kgPE/gCat, a titanium content of 0.86ppm, a magnesium content of 1.94ppm, an aluminum content of 23.7ppm, an ash content of 65ppm, a tensile yield strength of 24.2MPa, and a tensile fracture strength of 38.0MPa.

## Example 2

It was basically the same as Example 1, but with the following changes:
The polymerization solvent was changed to n-pentane having a boiling point of 36°C, and in the formulation of the main catalyst and the cocatalyst, it was changed to a solution in n-pentane.

The polymerization temperature of each polymerization reaction tank was changed to 60°C, and the polymerization pressure was changed to 2.5 MPa.

An ultra-high molecular weight polyethylene powder was thereby obtained, and had a viscosity-average molecular weight of 575 $\times 10^4$ g/mol, a bulk density of 0.41 g/cm$^3$, a polymerization activity of 55 kg PE/g Cat, a titanium element content of 0.57 ppm, a magnesium element content of 1.60 ppm, an aluminum element content of 18.4 ppm, an ash content of 47 ppm, a tensile yield strength of 24.5 MPa, a tensile fracture strength of 38.4 MPa.

**Example 3**

It was basically the same as Example 2, but with the following changes:
The used comonomer was 1-hexene. Ethylene and 1-hexene were introduced into each polymerization reaction tank so that the volume concentration of the comonomers in the gas phase in each polymerization tank was stably controlled at 0.5%. The used polymerization solvent was isopentane having a boiling point of 27.83°C. In the formulation of the main catalyst and the cocatalyst, it was changed to a solution in isopentane.

An ultra-high molecular weight polyethylene powder was thereby obtained, and had a viscosity-average molecular weight of 520 $\times 10^4$ g/mol, a bulk density of 0.44 g/cm$^3$, a comonomer molar insertion rate of 0.32%, a polymerization activity of 63 kg PE/g Cat, a titanium element content of 0.43 ppm, a magnesium element content of 1.25 ppm, an aluminum element content of 15.1 ppm, an ash content of 42 ppm, a tensile yield strength of 22.2 MPa, a tensile fracture strength of 38.2 MPa.

**Example 4**

It was basically the same as Example 1, but with the following changes:
The same four ethylene slurry polymerization reaction tanks connected in series were used, each had a volume of 10.4m$^3$ and an effective volume of 7.2m$^3$ and a discharging manner of overflow. The polymerization temperature of each polymerization reaction tank was changed to 70°C, ethylene was introduced to each polymerization reaction tank without comonomers in the tank, and the polymerization pressure of each polymerization reaction tank was changed to 2.7 MPa. The polymerization solvent was changed to n-pentane, and in the formulation of the main catalyst and the cocatalyst, it was changed to a solution in n-pentane.

The residence time in each polymerization reaction tank was arranged according to the ratio of 1:0.6:0.4:0.2, and the total polymerization residence time was 8 hours.

The feed amount of the polymerization solvent n-pentane in the first polymerization reaction tank was 2.9m$^3$/h, and the slurry concentration was controlled at 290 g polymer/L polymerization solvent. The feed amount of the polymerization solvent n-pentane in the second polymerization reaction tank was 2.1m$^3$/h, and the slurry concentration in the second polymerization tank was controlled at 310 g polymer/L polymerization solvent. The feed amount of the polymerization solvent n-pentane in the third polymerization reaction tank was 1.6m$^3$/h, and the slurry concentration in the third polymerization tank was controlled at 330 g polymer/L polymerization solvent. The feed amount of the polymerization solvent n-pentane in the fourth polymerization reaction tank was 0.7m$^3$/h, and the slurry concentration in the fourth polymerization tank was controlled at 350 g polymer/L polymerization solvent.

An ultra-high molecular weight polyethylene powder was thereby obtained, and had a viscosity-average molecular weight of 438 $\times 10^4$ g/mol, a bulk density of 0.46 g/cm$^3$, a polymerization activity of 72 kg PE/g Cat, a titanium element content of 0.38 ppm, a magnesium element content of 1.2 ppm, an aluminum element content of 14.4 ppm, an ash content of 42 ppm, a tensile yield strength of 24.7 MPa, a tensile fracture strength of 40.0 MPa.

**Example 5**

It was basically the same as Example 1, but with the following changes:
The used polyethylene main catalyst was the CMU catalyst, its support was anhydrous magnesium chloride and it has a titanium content of 4.20wt%. The cocatalyst and the main catalyst were continuously charged in a molar ratio of 60:1. The polymerization temperature of each polymerization reaction tank was changed to 78°C, and the polymerization pressure was changed to 1.0 MPa. The slurry was continuously discharged from the third polymerization reaction tank, centrifuged with a filter separator and dried to obtain an ultra-high molecular weight polyethylene powder, which had a viscosity-average molecular weight of 365 $\times 10^4$ g/mol, a bulk density of 0.40 g/cm$^3$, a polymerization activity of 55 kg PE/g Cat, a titanium element content of 0.85 ppm, a magnesium element content of 2.64 ppm, an aluminum element content of 26.6 ppm, an ash content of 79 ppm, a tensile yield strength of 23.0 MPa, a tensile fracture strength of 36.3 MPa.

**Example 6**

It was basically the same as Example 1, but with the following changes:
The used polyethylene main catalyst was the BCE-type Zeigler-Natta type catalyst described in Example 1 of Chinese patent application ZL201010240378.0, its support was anhydrous magnesium chloride and it has a titanium content of 9.5wt%. The cocatalyst and the main catalyst were continuously charged in a molar ratio of 75:1. The polymerization temperature of each polymerization reaction tank was changed to 72°C, and the polymerization pressure was changed to 2.2 MPa.

An ultra-high molecular weight polyethylene powder was thereby obtained, and had a viscosity-average molecular weight of 324 $\times 10^4$ g/mol, a bulk density of 0.45 g/cm$^3$, a polymerization activity of 42 kg PE/g Cat, a tensile yield strength of 23.3 MPa, and a tensile fracture strength of 35.2 MPa.

**Example 7**

It was basically the same as Example 6, but with the following changes:
The polymerization temperature of each polymerization reaction tank was changed to 88°C. An ultra-high molecular weight polyethylene powder was thereby obtained, and had a viscosity-average molecular weight of 176 $\times 10^4$ g/mol, a bulk density of 0.42 g/cm$^3$, a polymerization activity of 39 kg PE/g Cat, a tensile yield strength of 23.1 MPa, a tensile fracture strength of 34.3 MPa.

**Example 8**

It was basically the same as Example 6, but with the following changes:
The polymerization production was performed in the presence of the comonomer 1-butene. The volume concentration of 1-butene in each polymerization reaction tank was 2%.

An ultra-high molecular weight polyethylene powder was thereby obtained, and had a viscosity-average molecular weight of 155 $\times 10^4$ g/mol, a bulk density of 0.39 g/cm$^3$, a polymerization activity of 44 kg PE/g Cat, a comonomer molar insertion rate of 0.68%, a tensile yield strength of 23.2 MPa, and a tensile fracture strength of 35.3 MPa.

**Example 9**

It was basically the same as Example 1, but with the following changes:
The used polyethylene main catalyst was the supported metallocene catalyst described in Example 1 of China patent 201010521674.8, wherein its support was silica gel, and the active metal titanium element content was 0.62wt%. The cocatalyst was changed to tri-iso-butyl aluminum. The cocatalyst and the main catalyst were continuously charged in a molar ratio of 75:1. The polymerization temperature of each polymerization reaction tank was changed to 72°C, and the polymerization pressure was changed to 2.4 MPa.

An ultra-high molecular weight polyethylene powder was thereby obtained, and had a viscosity-average molecular weight of 324 $\times 10^4$ g/mol, a bulk density of 0.43 g/cm$^3$, a polymerization activity of 35 kg PE/g Cat, a titanium content of 1.65 ppm, a magnesium element content of 3.28 ppm, an aluminum content of 24 ppm, an ash content of 105 ppm, a tensile yield strength of 24.4 MPa, a tensile fracture strength of 40.4 MPa.

**Example 10**

It was basically the same as Example 1, but with the following changes:
The polymerization solvent was changed to a mixed alkane solvent composed of n-pentane and isopentane according to the molar proportion of 1:1 and having a saturated vapor pressure at 20°C of 66.6 KPa. In the formulation of the main catalyst and the cocatalyst, it was changed to the same solvent as the polymerization solvent.

An ultra-high molecular weight polyethylene powder was thereby obtained, and had a viscosity-average molecular weight of 485 $\times 10^4$ g/mol, a bulk density of 0.45 g/cm$^3$, a polymerization activity of 63 kg PE/g Cat, a titanium content of 0.72 ppm, a magnesium element content of 1.64 ppm, an aluminum content of 21.5 ppm, an ash content of 61 ppm, a tensile yield strength of 24.5 MPa, a tensile fracture strength of 38.7 MPa.

**Example 11**

It was basically the same as Example 1, but with the following changes:
The polymerization solvent was changed to a mixed alkane solvent composed of n-pentane, isopentane and cyclopentane according to the molar proportion of 1:1:1 and having a saturated vapor pressure at 20°C of 55.93 KPa. In the formulation

of the main catalyst and the cocatalyst, it was changed to the same solvent as the polymerization solvent.

An ultra-high molecular weight polyethylene powder was thereby obtained, and had a viscosity-average molecular weight of 505 $\times 10^4$ g/mol, a bulk density of 0.45 g/cm$^3$, a polymerization activity of 66 kg PE/g Cat, a titanium content of 0.70 ppm, a magnesium element content of 1.61 ppm, an aluminum content of 20.6 ppm, an ash content of 52 ppm, a tensile yield strength of 24.7 MPa, a tensile fracture strength of 38.5 MPa.

**Example 12**

It was basically the same as Example 1, but with the following changes:
The polymerization solvent was changed to a mixed alkane solvent composed of n-pentane, isopentane, cyclopentane and neopentane according to the molar proportion of 6:3:1:3 having a saturated vapor pressure at 20°C of 80.27KPa. In the formulation of the main catalyst and the cocatalyst, it was changed to the same solvent as the polymerization solvent.

An ultra-high molecular weight polyethylene powder was thereby obtained, and had a viscosity-average molecular weight of 325 $\times 10^4$ g/mol, a bulk density of 0.42 g/cm$^3$, a polymerization activity of 64 kg PE/g Cat, a titanium content of 0.72 ppm, a magnesium element content of 1.85 ppm, an aluminum content of 21.4 ppm, an ash content of 61 ppm, a tensile yield strength of 25.8 MPa, a tensile fracture strength of 39.2 MPa.

**Comparative Example 1**

It was basically the same as Example 1, but with the following changes:
Only the first polymerization reaction tank was used to continuously produce an ultra-high molecular weight polyethylene, and the slurry concentration was controlled at 330 g polymer/L polymerization solvent. The average residence time of the polymerization was 6 hours.

An ultra-high molecular weight polyethylene powder was thereby obtained, and had a viscosity-average molecular weight of 240 $\times 10^4$ g/mol, a bulk density of 0.33 g/cm$^3$, a polymerization activity of 42 kg PE/g Cat, a titanium element content of 1.37 ppm, a magnesium element content of 5.82 ppm, an aluminum element content of 37.4 ppm, an ash content of 212 ppm, a tensile yield strength of 20 MPa, and a tensile fracture strength of 32 MPa.

**Comparative Example 2**

It was basically the same as Example 2, but with the following changes:
Only the first polymerization reaction tank was used to continuously produce an ultra-high molecular weight polyethylene, and the slurry concentration was controlled at 330 g polymer/L polymerization solvent. The average residence time of the polymerization was 6 hours.

An ultra-high molecular weight polyethylene powder was thereby obtained, and had a viscosity-average molecular weight of 315 $\times 10^4$ g/mol, a bulk density of 0.34 g/cm$^3$, a polymerization activity of 34 kg PE/g Cat, a titanium element content of 2.51 ppm, a magnesium element content of 7.37 ppm, an aluminum element content of 41.7 ppm, an ash content of 245 ppm, a tensile yield strength of 20 MPa, and a tensile fracture strength of 31 MPa.

**Comparative Example 3**

It was basically the same as Example 1, but with the following changes:
Ethylene was introduced into the first polymerization reaction tank so that its polymerization pressure reached 2.2MPa. In the second polymerization reaction tank and the third polymerization reaction tank, a mixed gas of ethylene and nitrogen gas was introduced so that the ethylene volume ratio in the gas phase of the reaction tank was 50%. In addition, the polymerization temperature of the first polymerization reaction tank was 65°C, and the temperatures of the second polymerization reaction tank and the third polymerization reaction tank were 75°C.

An ultra-high molecular weight polyethylene powder was obtained and had a viscosity-average molecular weight of 405 $\times 10^4$ g/mol, a bulk density of 0.39 g/cm$^3$, a polymerization activity of 31 kg PE/g Cat, a titanium element content of 3.65 ppm, a magnesium element content of 9.57 ppm, an aluminum element content of 42.7 ppm, an ash content of 283 ppm, a tensile yield strength of 19.5 MPa, a tensile fracture strength of 33 MPa.

From the implementation data of Example 1 and Comparative Example 1, Example 2, and Comparative Example 2, it can be seen that the continuous production of the ultra-high molecular weight polyethylene through the ethylene slurry, using the polymerization manner of the cascade connection in series of the present invention, would achieve relatively high polymerization activity, bulk density, and viscosity-average molecular weight, and low titanium, magnesium, and aluminum element contents and low ash content.

In addition, due to using a single reaction tank for polymerization reaction in Comparative Examples 1-2, there was a phenomenon of ethylene back-mixing, which resulted in that a part of the catalyst activity was unable to be fully

and uniformly released, and the polymerization activity in Comparative Examples 1-2 was lower than that in Examples 1-2.The viscosity-average molecular weight and the bulk density of the polyethylene products obtained in Comparative Examples 1-2 were lower than those obtained in Examples 1 and 2. In addition, due to insufficient reaction, the residual content of metal elements was high and the ash content of polyethylene was high.

Although the embodiments of the present invention have been described in detail with reference to the examples, it should be noted that the scope of the present invention is not limited by the embodiments, but is defined by the appended claims.

Those skilled in the art can appropriately modify the embodiments without departing from the technical spirit and scope of the present invention, and it is obvious that the modified embodiments are also included in the scope of the present invention.

## Claims

1. A process for the continuous production of an ultra-high molecular weight polyethylene by the slurry polymerization, which is **characterized in that** raw materials containing ethylene and optionally at least one comonomer are subjected to a continuous slurry polymerization with 2-6, preferably 3-4 ethylene slurry reaction tanks connected in series as the reactor in a hydrogen free atmosphere, wherein, the main catalyst and the cocatalyst, and the raw materials containing ethylene and optionally at least one comonomer are continuously introduced to the first polymerization reaction tank, and the raw materials containing ethylene and optionally at least one comonomer are supplemented to each of subsequent polymerization reaction tanks, so that the deviation between the gas phase composition in each polymerization reaction tank and the gas phase composition of the first polymerization reaction tank does not exceed ±10%, the deviation between the polymerization pressure of each subsequent polymerization reaction tank and the pressure of the first polymerization reaction tank does not exceed ±20%, the deviation between the polymerization temperature and the temperature of the first polymerization reaction tank does not exceed ±8%, the slurry in each polymerization reaction tank leaves the reaction tank by using the manner of overflow or the manner of drawing out for actively controlling the flow rate and goes to the next reaction tank or goes to a post-treatment system.

2. The process for the continuous production of an ultra-high molecular weight polyethylene by the slurry polymerization according to claim 1, which is **characterized in that** an alkane solvent having a boiling point of 0-90°C or a mixed alkane solvent having a saturated vapor pressure at 20°C of 4-200 KPa is used as the polymerization solvent, preferably an alkane solvent having a boiling point of 25-82°C or a mixed alkane solvent having a saturated vapor pressure at 20°C of 30-160 KPa is used as the polymerization solvent, in each reaction tank the polymerization temperature is 40-100°C, preferably 50-90°C, the polymerization pressure is 0.2-4.0 MPa, preferably 1.0-3.0 MPa, more preferably 2.0-3.0 MPa, in each polymerization reaction tank the comonomer concentration by volume is 0-5%, preferably 0-3%, the slurry concentration in each reaction tank is 50-500 g polymer/L polymerization solvent, preferably 100-400 g polymer/L polymerization solvent, the residence time in each polymerization reaction tank is 0.1-6 hours, preferably 0.5-4.0 hours.

3. The process for the continuous production of an ultra-high molecular weight polyethylene by the slurry polymerization according to claim 1 or 2, which is **characterized in that**

   3 reaction tanks connected in series are used as the reactor, the polymerization slurry overflows from the overflow port of the previous polymerization reaction tank and directly goes to the next polymerization reaction tank, and the polymerization slurry from the last polymerization reaction tank goes to the aftertreatment system optionally via a slurry intermediate tank, the ratio of the residence times in the polymerization reaction tanks is 1:0.2-1:0.1-1; or
   4 reaction tanks connected in series are used as the reactor, the polymerization slurry overflows from the overflow port of the previous polymerization reaction tank and directly goes to the next polymerization reaction tank, and the polymerization slurry from the last polymerization reaction tank goes to the aftertreatment system optionally via a slurry intermediate tank, the ratio of the residence times in the polymerization reaction tanks is 1:0.2-1:0.1-1:0.1-1.

4. The process for the continuous production of an ultra-high molecular weight polyethylene by the slurry polymerization according to claim 3, which is **characterized in that**

   in case that 3 reaction tanks connected in series are used as the reactor, the ratio of the residence times is

1:0.4-0.8:0.2-0.6, the slurry intermediate tank to which the polymerization slurry from the last polymerization reaction tank goes is an agitation tank having a jacket-heating, keeping the slurry temperature substantially identical to the previous polymerization reaction tank; or

in case that 4 reaction tanks connected in series are used as the reactor, the ratio of the residence times is 1:0.4-0.8:0.2-0.6:0.1-0.4, the slurry intermediate tank to which the polymerization slurry from the last polymerization reaction tank goes is an agitation tank having a jacket-heating, keeping the slurry temperature substantially identical to the previous polymerization reaction tank.

**5.** The process for the continuous production of an ultra-high molecular weight polyethylene by the slurry polymerization according to any of claims 1-4, which is **characterized in that** the polymerization solvent is selected from n-pentane, isopentane, neopentane, cyclopentane, n-hexane, cyclohexane and a mixture of at least two thereof, more preferably selected from n-pentane, isopentane, neopentane, cyclopentane, a combination of n-pentane and isopentane, a combination of isopentane and neopentane, a combination of n-pentane and cyclopentane, a combination of n-pentane and neopentane, a combination of isopentane and cyclopentane, a combination of neopentane and cyclopentane, a combination of n-hexane and n-pentane, and a combination of n-pentane-isopentane-cyclopentane.

**6.** The process for the continuous production of an ultra-high molecular weight polyethylene by the slurry polymerization according to any of claims 1-5, which is **characterized in that** said comonomer is selected from C3-C10 alpha-olefins, and preferably selected from propene, 1-butene, 1-pentene, 1-hexene, 1-octene, and mixtures thereof.

**7.** The process for the continuous production of an ultra-high molecular weight polyethylene by the slurry polymerization according to any of claims 1-6, which is **characterized in that** the polyethylene catalyst as the main catalyst is selected from metallocene catalysts, non-metallocene catalysts, Zeigler-Natta type catalysts and mixtures thereof, preferably supported metallocene catalysts, non-metallocene catalysts, Zeigler-Natta type catalysts and mixtures thereof, the support is selected from silica gel supports, layered porous supports, organic polymer supports, magnesium compound supports, and oxide supports.

**8.** The process for the continuous production of an ultra-high molecular weight polyethylene by the slurry polymerization according to any of claims 1-7, which is **characterized in that** the polyethylene catalyst as the main catalyst is one of supported non-metallocene catalysts and Zeigler-Natta type catalysts, and the support is at least one of porous silica gel supports and magnesium compound supports.

**9.** The process for the continuous production of an ultra-high molecular weight polyethylene by the slurry polymerization according to any of claims 1-8, which is **characterized in that** the aluminoxane as the cocatalyst is selected from methyl aluminoxane, ethyl aluminoxane, iso-butyl aluminoxane, n-butyl aluminoxane and mixtures thereof, preferably selected from methyl aluminoxane, iso-butyl aluminoxane and mixtures thereof, the alkyl aluminum as said cocatalyst is selected from trimethyl aluminum, triethyl aluminum, tri-propyl aluminum, tri-iso-butyl aluminum, tri-n-butyl aluminum, tri-iso-pentyl aluminum, tri-n-pentyl aluminum, trihexyl aluminum, tri-iso-hexyl aluminum, diethyl methyl aluminum, dimethyl ethyl aluminum and mixtures thereof, preferably selected from trimethyl aluminum, triethyl aluminum, tri-propyl aluminum, tri-iso-butyl aluminum and mixtures thereof, most preferably selected from triethyl aluminum, tri-iso-butyl aluminum and mixtures thereof, the haloalkyl aluminum as said cocatalyst is selected from monochlorodimethylaluminum, dichloromethylaluminum, monochlorodiethylaluminum, dichloroethylaluminum, monochlorodipropylaluminum, dichloropropylaluminum, monochlorodi-n-butylaluminum, dichloro-n-butylaluminum, monochlorodiisobutylaluminum, dichloro-isobutylaluminum, monochlorodi-n-hexylaluminum, dichloro-n-hexylaluminum, monochlorodiisohexylaluminum, dichloro-isohexylaluminum and mixtures thereof, preferably selected from monochlorodiethylaluminum, dichloroethylaluminum, monochlorodi-n-butylaluminum, dichloro-n-butylaluminum, monochlorodiisobutylaluminum, dichloro-isobutylaluminum, monochlorodi-n-hexylaluminum, dichloro-n-hexylaluminum, further preferably selected from monochlorodiethylaluminum, dichloroethylaluminum, monochlorodi-n-hexylaluminum and mixtures thereof, and most preferably selected from monochlorodiethylaluminum, dichloroethylaluminum and mixtures thereof.

**10.** The process for the continuous production of an ultra-high molecular weight polyethylene by the slurry polymerization according to any of claims 1-9, wherein the concentration of the main catalyst in the first polymerization reaction tank is 0.001-0.100 mmol/L the polymerization solvent, preferably 0.005-0.050 mmol/L the polymerization solvent, and the molar ratio of the cocatalyst to the main catalyst is 20-200:1, preferably 30-100:1.

**11.** An ultra-high molecular weight polyethylene, which is **characterized in that** the viscosity-average molecular weight is 150-800 $\times 10^4$ g/mol, preferably 300-700 $\times 10^4$ g/mol, the metal element content is 0-40 ppm, preferably 0-30

ppm, the tensile yield strength is greater than 21 MPa, preferably greater than 23 MPa, and the tensile fracture strength is greater than 33 MPa, preferably greater than 35 MPa.

**12.** The ultra-high molecular weight polyethylene according to claim 11, which is **characterized in that** the bulk density is 0.30-0.55 g/cm$^3$, preferably 0.33-0.52 g/cm$^3$, the comonomer molar insertion rate is 0-2.0%, preferably 0-1.0%, and the ash content is less than 200 ppm, preferably less than 150 ppm.

**13.** The ultra-high molecular weight polyethylene according to claim 11 or 12, which is **characterized in that** the titanium content is 0-3 ppm, preferably 0-2 ppm, more preferably 0-1 ppm, the magnesium content is 0-10 ppm, preferably 0-5 ppm, more preferably 0-2 ppm, the aluminum content is 0-30 ppm, preferably 0- 25 ppm, more preferably 0-20 ppm.

**14.** The ultra-high molecular weight polyethylene according to any of claims 11-13, which is **characterized in that** the comonomer is selected from $C_3$-$C_{10}$ alpha-olefin, preferably selected from propene, 1-butene, 1-pentene, 1-hexene, 1-octene, and mixtures thereof, more preferably selected from 1-butene, 1-hexene and mixtures thereof.

**INTERNATIONAL SEARCH REPORT**

International application No. **PCT/CN2022/074012**

**A. CLASSIFICATION OF SUBJECT MATTER**

C08F 2/01(2006.01)i; C08F 210/16(2006.01)i

According to International Patent Classification (IPC) or to both national classification and IPC

**B. FIELDS SEARCHED**

Minimum documentation searched (classification system followed by classification symbols)

C08F

Documentation searched other than minimum documentation to the extent that such documents are included in the fields searched

Electronic data base consulted during the international search (name of data base and, where practicable, search terms used)

CNKI, ISI WEB OF SCIENCE, VEN, VCN, DWPI, 超高分子量聚乙烯, 聚乙烯, 乙烯, 淤浆, 串联, 釜, 连续, 灰分, 拉伸, UHMWPE, polyethylene, PE, ethylene, slurry, in series, kettle , autoclave, continuous, ash, Tensile

**C. DOCUMENTS CONSIDERED TO BE RELEVANT**

| Category* | Citation of document, with indication, where appropriate, of the relevant passages | Relevant to claim No. |
|---|---|---|
| X | US 2009163679 A1 (BRASKEM SA) 25 June 2009 (2009-06-25) description, pages 2-6 | 1-10 |
| Y | US 2009163679 A1 (BRASKEM SA) 25 June 2009 (2009-06-25) description, pages 2-6 | 1-10 |
| Y | CN 105504124 A (SINOPEC YANGZI PETROCHEMICAL COMPANY LTD.; CHINA PETROLEUM & CHEMICAL CORPORATION) 20 April 2016 (2016-04-20) description, pages 1-4 | 1-10 |
| X | US 2019225714 A1 (THAI POLYETHYLENE CO LTD et al.) 25 July 2019 (2019-07-25) description, pages 2-5 | 1-10 |
| X | JP 6225109 A (MITSUI PETROCHEMICAL INDUSTRIES, LTD.) 03 February 1987 (1987-02-03) description, pages 2-6 | 1-10 |
| X | CN 105658683 A (DSM IP ASSETS B.V.) 08 June 2016 (2016-06-08) description, pages 5-7 | 11-14 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 April 2022** | **05 May 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.
**PCT/CN2022/074012**

**C. DOCUMENTS CONSIDERED TO BE RELEVANT**

| Category* | Citation of document, with indication, where appropriate, of the relevant passages | Relevant to claim No. |
|---|---|---|
| Y | 于正一 (YU, Zhengyi). "冷凝模式下降低Unipol工艺聚乙烯树脂灰分的方法 (Reducing Ash Content of Unipol Polyethylene in Condensate Mode of Operation)" *石油化工 (Petrochemical Technology),* No. 03, 20 March 2005 (2005-03-20), entire document | 1-10 |
| X | 高宇 (GAO, Yu). "偏心转子挤出加工对UHMWPE结构与性能影响研究 (Study on Structure and Properties of UHMWPE Prepared by Eccentric Rotor Extruder)" *华南理工大学硕士电子期刊 (Electronic Journal of South China University of Technology (Master's Theses)),* 15 January 2020 (2020-01-15), entire document | 11-14 |

Form PCT/ISA/210 (second sheet) (January 2015)

**INTERNATIONAL SEARCH REPORT**
**Information on patent family members**

International application No.
**PCT/CN2022/074012**

| Patent document cited in search report | | | Publication date (day/month/year) | Patent family member(s) | | | Publication date (day/month/year) |
|---|---|---|---|---|---|---|---|
| US | 2009163679 | A1 | 25 June 2009 | BR | PI0801737 | A2 | 22 December 2009 |
| | | | | WO | 2009076733 | A1 | 25 June 2009 |
| | | | | CL | 2008003603 | A1 | 27 November 2009 |
| | | | | AR | 069718 | A1 | 10 February 2010 |
| CN | 105504124 | A | 20 April 2016 | None | | | |
| US | 2019225714 | A1 | 25 July 2019 | KR | 20190055106 | A | 22 May 2019 |
| | | | | AU | 2017322270 | A1 | 07 March 2019 |
| | | | | CA | 3033012 | A1 | 15 March 2018 |
| | | | | PL | 3293214 | T3 | 27 July 2020 |
| | | | | RU | 2728873 | C1 | 31 July 2020 |
| | | | | ZA | 201901598 | B | 28 July 2021 |
| | | | | EP | 3510086 | A1 | 17 July 2019 |
| | | | | RU | 2019110831 | A | 12 October 2020 |
| | | | | US | 2020095404 | A1 | 26 March 2020 |
| | | | | JP | 2019526688 | A | 19 September 2019 |
| | | | | BR | 112019002864 | A2 | 14 May 2019 |
| | | | | AU | 2017322271 | A1 | 07 March 2019 |
| | | | | CA | 3033116 | A1 | 15 March 2018 |
| | | | | WO | 2018046713 | A1 | 15 March 2018 |
| | | | | BR | 112019002965 | A2 | 21 May 2019 |
| | | | | WO | 2018046712 | A1 | 15 March 2018 |
| | | | | ZA | 201901603 | B | 30 June 2021 |
| | | | | CN | 108350200 | A | 31 July 2018 |
| | | | | KR | 20190055128 | A | 22 May 2019 |
| | | | | JP | 2019526685 | A | 19 September 2019 |
| | | | | CN | 108368185 | A | 03 August 2018 |
| | | | | EP | 3293214 | A1 | 14 March 2018 |
| JP | 6225109 | A | 03 February 1987 | JP | S6225109 | A | 03 February 1987 |
| CN | 105658683 | A | 08 June 2016 | JP | 2016534165 | A | 04 November 2016 |
| | | | | JP | 2021191864 | A | 16 December 2021 |
| | | | | WO | 2015059268 | A1 | 30 April 2015 |
| | | | | US | 2016272738 | A1 | 22 September 2016 |
| | | | | KR | 20160078394 | A | 04 July 2016 |
| | | | | BR | 112016008794 | B1 | 23 February 2021 |
| | | | | ES | 2769886 | T3 | 29 June 2020 |
| | | | | EP | 3060587 | A1 | 31 August 2016 |
| | | | | SA | 516371003 | B1 | 04 July 2018 |
| | | | | KR | 20210111875 | A | 13 September 2021 |
| | | | | US | 2017362355 | A1 | 21 December 2017 |
| | | | | JP | 2019131821 | A | 08 August 2019 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 201510078777
- CN 201610892424
- CN 201610892732
- US 201610892836
- US 201610892837
- CN 1781956 A
- CN 1781953 A
- CN 1405224 A
- CN 103342842 A
- CN 200310106156X
- CN 200310106157
- CN 200410066068
- CN 200510119401X
- CN 200610107651
- CN 200710162677
- CN 200710162667
- CN 200710162672
- CN 200710162675
- CN 200710162676
- CN 200710162666
- CN 200910180100
- CN 200910180607
- CN 200910180601
- CN 200910180606
- CN 200910180602
- CN 200910180605
- CN 200910180603
- CN 200910180604
- CN 200910210988
- CN 200910210984
- CN 200910210989
- CN 200910210986
- CN 200910210985X
- CN 200910210990
- CN 200910210987
- CN 200910210991
- CN 201010286008
- CN 201010286012
- CN 201010284870
- CN 201010285982
- CN 201010284856
- CN 201010285970
- CN 201010285956
- CN 201010285969X
- CN 201010285958
- CN 201010285967
- CN 201010285994
- CN 201110259336
- CN 201110259219X
- CN 201110259330
- CN 201110259327
- CN 201110259367
- CN 201110259289
- CN 201110259359
- CN 201110259282
- CN 201110259318
- CN 201110259258X
- CN 201110259300
- CN 201110259254
- CN 001110259299
- CN 201110259245
- CN 201110259296
- CN 201110259338
- CN 201110259370
- CN 201110259339X
- CN 201110259293
- CN 201110259356
- CN 201210063756
- CN 201210063777
- CN 201210063788
- CN 201210063818
- CN 201210063824
- CN 201210063843
- CN 201210063854
- CN 201210063876
- CN 201210063878
- CN 201210063891
- CN 201210063894X
- CN 201210063907
- CN 201210063909
- CN 201210063935
- CN 201210063941
- CN 201210063945
- CN 201310189677X
- CN 201310227368
- CN 201310227370
- CN 201310227830
- CN 201310227393
- CN 201310452714
- CN 201710814678
- CN 201710814595
- CN 201710814594
- CN 201710814593
- CN 201710814592
- CN 201710814591X
- CN 201811144599
- CN 201811144768
- CN 201811139936

- CN 201811140811
- CN 201811139946
- CN 201811139741
- CN 201310091208
- CN 201110247347
- CN 201110080343X
- CN 201010518904
- CN 201010519660
- CN 201210289014
- CN 200910078596
- CN 201310090758
- CN 201310090736
- CN 201310521768
- CN 201410589467
- CN 201410590067
- CN 201610835700
- CN 201610944191
- CN 201710959423X
- CN 201110247349
- CN 201110080294X
- CN 201110080395
- CN 201210289017
- CN 201210289031
- CN 201310091192
- CN 201310540973X
- CN 201510724626
- CN 200410086283
- CN 200610137777
- CN 201610944182
- CN 201710312720
- CN 201110080422
- CN 201110080394
- CN 201010519406
- CN 201010519715X
- CN 201010519174
- CN 201010519429
- CN 201210289004
- CN 201310090847
- CN 201310091209
- CN 201310540975
- CN 201410554709
- CN 201410513506
- CN 00130388
- CN 200710176589
- CN 201610944083
- CN 201110246705
- CN 201110247085X
- CN 2011102914899
- CN 201010521674
- CN 201310090752
- CN 201310090848
- CN 2013100908483
- CN 201510624502
- CN 201710166709
- CN 20171031225
- CN 201110246710
- CN 201110080374
- CN 201010519797
- CN 201210289012
- CN 201210418645
- CN 201310090998
- CN 201410252254
- CN 201610393399
- CN 201610956141X
- CN 201710958837
- CN 201010522112
- CN 201010240355X
- CN 201010502803
- CN 201010511310
- CN 200710121105
- CN 201010502778
- CN 201010502717
- CN 201010240379
- CN 201110148492
- CN 201110148493X
- CN 201110148527
- CN 201110148545
- CN 201110306102
- CN 201010240378
- CN 200410086382
- CN 98101108X
- CN 200410078280
- CN 200910088546
- GB 163679 A
- GB 104022006 T